(19) 

Europäisches
Patentamt
European
Patent Office
Office européen
des brevets

(11) **EP 2 506 651 A2**

(12) **EUROPEAN PATENT APPLICATION**

(43) Date of publication:
**03.10.2012 Bulletin 2012/40**

(51) Int Cl.:
***H04W 84/04*** *(2009.01)*

(21) Application number: **12162055.3**

(22) Date of filing: **29.03.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (71) Applicant: **FUJITSU LIMITED**<br>**Kawasaki-shi,**<br>**Kanagawa 211-8588 (JP)** |
| (30) Priority: **30.03.2011 JP 2011075489**<br>**15.03.2012 JP 2012058522** | (72) Inventor: **Oota, Yoshiyuki**<br>**Kanagawa, 211-8588 (JP)** |
| | (74) Representative: **HOFFMANN EITLE**<br>**Patent- und Rechtsanwälte**<br>**Arabellastrasse 4**<br>**81925 München (DE)** |

(54) **Base station, communication system, and communication method**

(57)     A base station includes a first communication section configured to communicate a wireless signal with the mobile station and another base station, a second communication section configured to communicate a data signal with a core network being connected to the base station, a wireless relay function section configured to perform first control to relay the wireless signal to be communicated with the other base station between the other base station and the mobile station, a communication function section configured to perform second control to convert between a data signal and a wireless signal, and to transmit the converted data signal and the converted wireless signal, and a selection control section configured to select at least one of the first control and the second control to use for communication with the mobile station, based on a reception level of the wireless signal from the other base station.

FIG. 1

**Description**

FIELD

The embodiments discussed herein are related to a base station, a communication system, and a communication method.

BACKGROUND

There is a femto base station for reducing an aria having a poor signal condition such as a gap in buildings, indoor, an underground mall, a high-rise area, or the like. The femto base station is installed in a small office such as a home, SOHO (Small Office/Home Office) or the like, and covers a restricted range (femto cell) having a radius of around several tens of meters. Also, the femto base station is connected to a core network via a general line such as a fixed line connected to a fixed phone within a home, i.e., a phone line, an optical fiber, a CATV (Common Antenna Television) cable.

According to the above femto base station being installed, a terminal existing even in a so-called blind zone where radio waves do not reach, such as a gap in buildings, indoor, a underground mall, a high-rise area, or the like may perform communication, and may also be occupied by a user within a small range, and accordingly, throughput may be improved as compared to a macro base station which is a public base station.

Also, the following femto base station has been disclosed in a later-described prior art document, In the event that a femto base station has had abnormality in a line to which the femto station is connected, and has become a disable state, the femto station may be switched to a repeater mode (e.g., see Japanese Laid-open Patent Publication No. 2010-56881).

SUMMARY

Accordingly, it is an object in one aspect of embodiments discussed herein to provide a base station, a communication system, and a communication method which may improve a throughput of a mobile station and may reduce interference to a mobile station.

According to an aspect of the embodiments discussed herein, a base station includes a first communication section configured to communicate a wireless signal with the mobile station and another base station, a second communication section configured to communicate a data signal with a core network being connected to the base station, a wireless relay function section configured to perform first control to relay the wireless signal to be communicated with the other base station between the other base station and the mobile station, a communication function section configured to perform second control to convert between a data signal and a wireless signal, and to transmit the converted data signal and the converted wireless signal, and a selection control section configured to select at least one of the first control and the second control to use for communication with the mobile station, based on a reception level of the wireless signal from the other base station.

BRIEF DESCRIPTION OF DRAWINGS

FIG. 1 is an overview of a communication system;
FIG. 2 is an overview of a femto base station application example 1 according to a first embodiment;
FIG. 3 is an overview of a femto base station application example 2 according to the first embodiment;
FIG. 4 is an explanatory diagram regarding a signal to interference power ratio according to the first embodiment;
FIG. 5 is a function block diagram/hardware configuration diagram of a femto base station according to the first embodiment;
FIG. 6 is a flowchart illustrating the operation and processing of the femto base station according to the first embodiment;
FIG. 7 is an overview of a femto base station application example 1 according to a second embodiment;
FIG. 8 is an overview of a femto base station application example 2 according to the second embodiment;
FIG. 9 is an explanatory diagram regarding received signal strength according to the second embodiment;
FIG. 10 is a function block diagram/hardware configuration diagram of a femto base station according to the second embodiment;
FIG. 11 is a flowchart illustrating the operation and processing of the femto base station according to the second embodiment;
FIG. 12 is an overview of a femto base station application example 1 according to a third embodiment;
FIG. 13 is an overview of a femto base station application example 2 according to the third embodiment;

FIG. 14 is a diagram illustrating, with the femto base station application example 1 according to the third embodiment, the reception power level of a mobile station which communicates with this femto base station;

FIG. 15 is a diagram illustrating, with the femto base station application example 2 according to the third embodiment, the reception power level of a mobile station which communicates with this femto base station;

FIG. 16 is a function block diagram/hardware configuration diagram of a femto base station according to the third embodiment;

FIG. 17 is a flowchart illustrating the operation and processing of the femto base station according to the third embodiment;

FIG. 18 is an overview of a femto base station application example 1 according to a fourth embodiment;

FIG. 19 is an overview of a femto base station application example 2 according to the fourth embodiment;

FIG. 20 is a diagram illustrating, with the femto base station application example 1 according to the fourth embodiment, the reception power level of a mobile station which communicates with this femto base station;

FIG. 21 is a diagram illustrating, with the femto base station application example 2 according to the fourth embodiment, the reception power level of a mobile station which communicates with this femto base station;

FIG. 22 is a function block diagram/hardware configuration diagram of a femto base station according to the fourth embodiment; and

FIG. 23 is a flowchart illustrating the operation and processing of the femto base station according to the fourth embodiment.

DESCRIPTION OF EMBODIMENTS

Hereinafter, embodiments according to a disclosed base station, communication system, and communication method will be described with reference to the drawings. The configurations of the following embodiments illustrated in the drawings are an example, and the present disclosure is not restricted to such configurations.

While inventing the present embodiments, observations were made regarding a related art. Such observations include the following, for example.

An area where a user installs a femto base station is frequently an area including a place where radio waves reach but a mobile station has difficultly with communication, besides complete blind zones. Accordingly, it may be conceived that the cell range of a macro base station (macro cell) and the cell range of a femto base station (femto cell) overlap. Further, the frequency band which a macro base station uses for communication, and the frequency band which a femto base station uses for communication are frequently the same, and accordingly, it may be conceived that interference occurs in a range where a macro cell and a femto cell overlap.

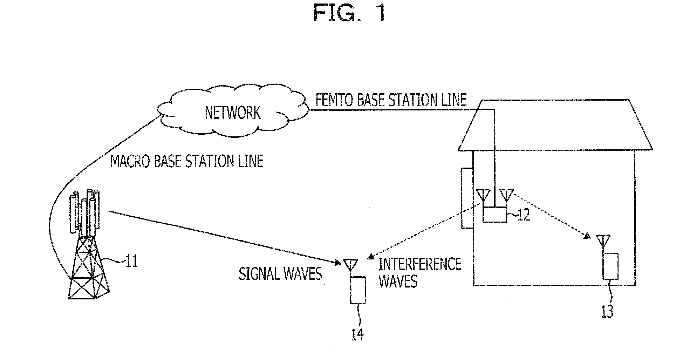

For example, there may be a case where around the center portion within a building is a complete blind zone, and is a place where radio waves reach but a terminal has low communication capability, such as by the window or the like. In this case, as illustrated in FIG. 1, in the event that a user has installed a femto base station 12 by the window, radio waves that the femto base station 12 outputs leak out of the building. At this time, if we say that the frequency bands used by a macro base station 11 and the femto base station 12 are the same, radio waves output from the femto base station 12 leaked out from the window have an influence on a mobile station 14 connected to the macro base station 11, and cause interference on this mobile station 14.

In the event that the transmission power of the femto base station 12 has been reduced to reduce the above interference, it is difficult to provide sufficient services to a mobile station 13 connected to this femto base station 12. Accordingly, it may become difficult to improve the throughput of an indoor mobile station that is the original object for installing the femto base station.

First Embodiment

With a first embodiment, a femto base station includes a wireless relay function section and a communication function section. The femto base station measures the signal to interference power ratio SINR (Signal Interference Noise Ratio) of the installation location of this femto base station, and in the case that the measurement result is greater than a threshold, selects communication employing the wireless relay function section and operates as a repeater, and in the case that the measurement result is smaller than the threshold, selects communication employing the communication function section and operates as a femto base station.

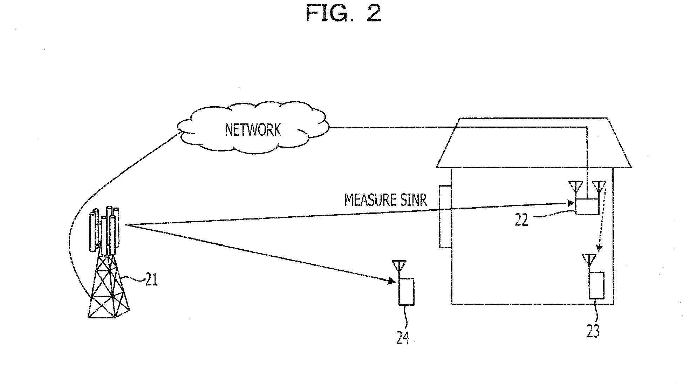

Details regarding the first embodiment will be described with reference to FIGs. 2 through 6.

1.1 Overview

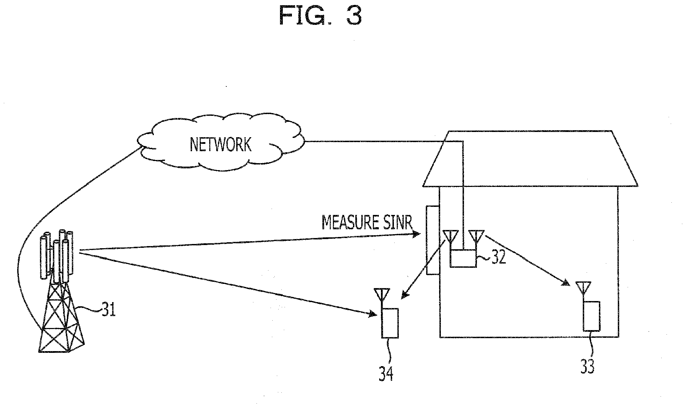

FIGs. 2 and 3 are overviews of a communication system according to the first embodiment. The femto base station 22 in FIG. 2 performs communication employing a later-described communication function section, thereby operating as a femto base station. The femto base station 32 in FIG. 3 performs communication employing a later-described wireless relay function section, thereby operating as a repeater.

FIG. 2 is an overview illustrating a scene where the femto base station according to the first embodiment performs communication employing the communication function section, thereby operating as a femto base station. For example, let us say that the femto base station 22 has been installed in the back of a room which is a blind zone, or the like, and the value of the SINR as to the macro base station 21 in the installation location is smaller than a threshold. In this case, the femto base station 22 starts the operation of a femto operation, and performs communication employing the communication function section, thereby operating as a femto base station. Note that the threshold may optionally be set by a person skilled in the art performing simulation or the like.

In this case, the installation location of the femto base station 22 is a location where the SINR as to the macro base station 21 is small, and accordingly, it may be conceived that a signal received from the macro base station 21 is small, the overlapping of the cell ranges of the macro base station 21 and femto base station 22 is small. Accordingly, it may be conceived that interference wherein the femto base station 22 affects a mobile station 24 connected to the macro base station 21 is small. Further, communication with sufficient throughput may be provided with communication according to the communication function section even for the mobile station 23 connected to the femto base station 22.

Next, FIG. 3 is an overview illustrating a scene where the femto base station according to the first embodiment performs communication employing the wireless relay function section, thereby operating as a repeater. In FIG. 3, let us say that the femto base station 32 has been installed by the window of a room which is not a complete blind zone, or the like, and the SINR as to the macro base station 31 in the installation location is great. In this case, the femto base station 32 according to the first embodiment starts operation of the repeater mode, and perform communication employing the wireless relay function section, thereby operating as a repeater.

In this case, the installation location of the femto base station 32 is a location where the value of the SINR as to the macro base station 31 is great, and accordingly, it may be conceived that a signal received from the macro base station 31 is strong, the overlapping of the cell ranges of the macro base station 31 and femto base station 32 is great. Accordingly, if the femto base station 32 operates in femto mode, it may be conceived that interference wherein the femto base station 32 affects a mobile station 34 connected to the macro base station 31 will be great. Accordingly, interference as to the mobile station 34 connected to the macro base station 31 may be reduced by operating in the repeater mode. Further, even in the event that the femto base station 32 performs operation in the repeater mode, upon receiving the signal of the macro base station 31 via the femto base station 32 which operates in the repeater mode, the mobile station 33 switches to communication with the macro base station 31, and performs communication with the macro base station 31 via the femto base station 32 which operates in the repeater mode. Further, the femto base station 32 which operates in the repeater mode amplifies the signal received from the macro base station 31, relays to the mobile station 33, amplifies the signal received from the mobile station 33, relays to the macro base station 31, whereby communication with sufficient throughput may also be provided to the mobile station 33.

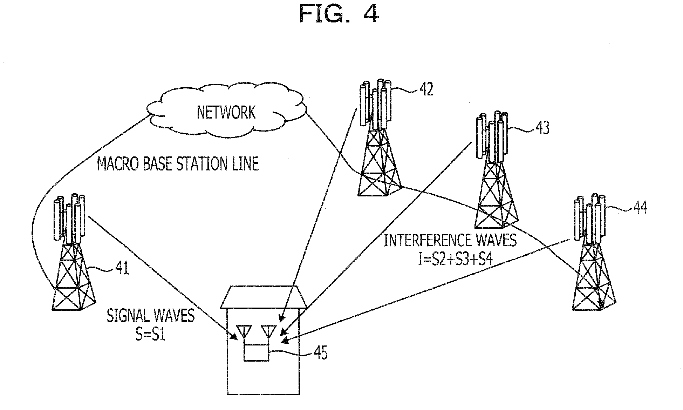

The signal to interference power ratio SINR will be described here with reference to FIG. 4. With the first embodiment, the signal to interference power ratio SINR is made up of a ratio between the reception power of a wireless signal that a femto base station received from another base station, and the total of the reception power of a wireless signal transmitted from a base station other than the other base station reaching this femto base station. The SINR as to the macro base station 41 for the femto base station 45 indicates a signal to interference power ratio by regarding the signals from the macro base station 42, macro base station 43, and macro base station 44 as interference waves.

The SINR is represented with [power value (S1) of signal waves (radio waves from the macro base station 41) / total power value of interference waves (S2 + S3 + S4)]. As may also be understood from the above expression, it may be found that a location with high SINR strongly receives the signal waves from the macro base station 41. Accordingly, in the event that the femto base station 45 has radiated radio waves from a location with high SINR, it may be found that the radiated radio waves become strong interference, and interference becomes great for a mobile station which exists around thereof and performs communication with the macro base station 41.

On the contrary, it may be found that a location with low SINR is weak in the signal waves received from the macro base station 41. That is to say, it may be conceived that a location with low SINR is a blind zone. Accordingly, upon radiating radio waves from a location with low SINR, the femto base station 45 may cover communication of a mobile station existing in a blind zone by the radiated radio waves.

That is to say, at a location with high SINR, according to a repeater being installed, a mobile station may perform communication with the macro base station 41 while relaying the radio waves of the macro base station 41, and keeping the SINR of the macro base station 41 high. Further, at a location with low SINR, according to a femto base station being installed, a mobile station may perform communication with the femto base station 45 while increasing the SINR as to the femto base station around the mobile station in a state in which inference as to the outside is small, and keeping the SINR of the femto base station 45 high.

1.2 Configuration

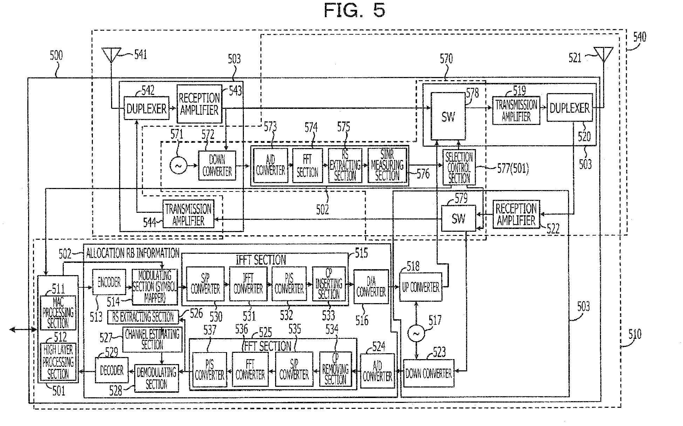

FIG. 5 is a function block diagram/hardware configuration diagram of a femto base station according to the first embodiment. Note that description will be made here with OFDM modulation as an example, but the present disclosure is not restricted to OFDM modulation.

As illustrated in FIG. 5, the femto base station 500 according to the first embodiment includes a communication function section 510, a wireless relay function section 540, and a selection control section 570.

The communication function section 510 includes an MAC (Media Access Control) processing section 511, a High Layer processing section 512, an encoder 513, a modulating section 514, an IFFT (Inverse Fast Fourier Transform) section 515, a D/A converter 516, a local signal generating section 517, an up converter 518, a switching control section 570, a transmission amplifier 519, a duplexer 520, a mobile station antenna 521, a reception amplifier 522, a down converter 523, an A/D converter 524, an FFT (Fast Fourier Transform) section 525, a RS (Reference Signal) extracting section 526, a channel estimating section 527, a demodulating section 528, and a decoder 529. Also, the IFFT section 515 includes an S/P (Serial/Parallel) converter 530, an IFFT converter 531, a P/S (Parallel/Serial) converter 532, and a CP (Cyclic Prefix) inserting section 533. The FFT section 525 includes a CP removing section 534, an S/P converter 535, an FFT converter 536, and a P/S converter 537.

The communication section 510 having the above configuration is a function section for realizing the femto mode according to the first embodiment, connected to a core network via a general line such as a fixed line connected to a fixed phone within a home, i.e., a phone line, an optical fiber, a CATV (Common Antenna TeleVision) cable or the like, and realizes the same function as with a femto base station which covers a radius of around several tens of meters. Specifically, the communication function section 510 performs communication with a mobile station by communication employing the communication function section, converts a data signal received from the core network via a general line or the like into a wireless signal, transmits to the mobile station, converts a wireless signal received from the mobile station into a data signal, and transmits to the core network via a general line or the like.

The wireless relay function section 540 includes a base station antenna 541, a duplexer 542, a reception amplifier 543, a switching control section 570, a transmission amplifier 519, a duplexer 520, a mobile station antenna 521, a reception amplifier 522, and a transmission amplifier 544. Also, the switching control section 570, transmission amplifier 519, reception amplifier 522, duplexer 520, and mobile station antenna 521 in the communication function section 510 are the same as those described above.

The wireless relay function section 540 having the above configuration is a function section for realizing the repeater mode according to the present disclosure, and realizes the same function as with a repeater for performing control so as to relay a wireless signal to be transmitted/received between another base station and a mobile station. Specifically, the wireless relay function section 540 performs communication with a mobile station by communication employing the wireless relay function section, amplifies a downlink wireless signal transmitted from another base station, transmits to the mobile station, amplifies a uplink wireless signal transmitted from the mobile station, and transmits to the base station.

The switching control section 570 includes a local signal generating section 571, a down converter 572, an A/D converter 573, an FFT section 574, a RS extracting section 575, an SINR measuring section 576, a selection control section 577, a switch 578, and a switch 579. Also, the switching control section 570 is the switching control section 570 which the above communication function section 510 and wireless relay function section 540 include.

The switching control section 570 having the above configuration realizes a function wherein the reception level of a wireless signal received from another base station is measured, one of the femto mode that is communication employing the above communication function section 510, and the repeater mode that is communication employing the wireless relay function section 540 is selected as communication with a mobile station based on the reception level of the measured wireless signal, thereby switching to the selected mode. With the first embodiment, the switching control section 570 measures the SINR as the reception level of the wireless signal received from the other base station, selects one of the femto mode and repeater mode based on the value of the measured SINR, and switches to the selected mode.

Also, the MAC processing section 511, High Layer processing section 512, and selection control section 577 are included in a CPU 501, and the encoder 513, modulating section 514, IFFT section 515, D/A converter 516, A/D converter 524, FFT section 525, RS extracting section 526, channel estimating section 527, demodulating section 528, decoder 529, A/D converter 573, FFT section 574, RS extracting section 575, and SINR measuring section 576 are included in a DSP 502, and other than those are RF components 503.

Here, the CPU (Central Processing Section) 501 is an example of a configuration for performing control of various function sections, and executes an application program or the like, thereby performing control of various function sections, and reading/writing of data from/to memory. Also, the CPU 501 controls packet processing and calling processing.

The DSP (Digital Signal Processor) 502 is a processor specialized in digital signal processing, and executes modulation and demodulation of signals.

RF (Radio Frequency) component 503 is a blanket term for high-frequency components, e.g., a component of an amplifier circuit or the like.

1.3 Switching Control Section

Now, detailed description will be made regarding the switching control section 570.

Upon receiving a high-frequency signal via the base station antenna 541, duplexer 542, and reception amplifier 543, the down converter 572 subjects the received signal to down conversion to a baseband signal using the local signal input from the local signal generating section 571 to reduce load at digital processing.

The A/D converter 573 converts the input signal (analog signal) from the down converter 572, and outputs to the FFT section 574. The FFT section 574 is a function section having an algorithm for effectively realizing discrete Fourier transform, and transforms the discrete sequence of a temporal area into the discrete spectrum of a frequency region.

The RS extracting section 575 extracts a RS signal, and outputs to the SINR measuring section 576. The SINR measuring section 576 measures an SINR value at the own femto base station from the input signal from the RS extracting section 575, and outputs the measurement result to the selection control section 577.

The selection control section 577 selects whether to operate in the femto mode or repeater mode based on the input from the SINR measuring section 576, and controls the switches 578 and 579 based on the selected result.

For example, in the event that the SINR is a smaller value than a threshold, the selection control section 577 selects to operate in the femto mode, and outputs a control signal to the switches 578 and 579 so as to perform communication employing the communication function section. On the contrary, in the event that the SINR is a greater value than the threshold, the selection control section 577 selects to operate in the repeater mode, and outputs a control signal to the switches 578 and 579 so as to perform communication employing the wireless relay function section.

1.4.1 Downlink

Now, downlink communication according to the first embodiment will be described.

With the communication function section 510, the MAC processing section 511 adds an MAC header and so forth after packing of a plurality of IP packet data or dividing into a plurality of IP packet data. The High Layer processing section 512 has a buffer control function for passing the IP packet data to the MAC processing section 511.

The encoder 513 outputs, for example, a signal encoded by an encoder or the like to the modulating section 514.

The modulating section 514 is for converting the data of multiple bits into corresponding complex symbols, and has a configuration corresponding to the modulation method of the symbol. With the modulating section 514, a data bit string to be transmitted is converted into a complex symbol string for modulating the carriers, and output to the IFFT section 515.

The IFFT section 515 includes the S/P converter 530, IFFT converter 531, P/S converter 532, and CP inserting section 533. The complex symbol string input from the modulating section 514 is accumulated in the S/P converter 530, and collectively transformed by inverse discrete Fourier transform at the IFFT converter 531, thereby generating sampled values. Further, the obtained sampled values are subjected to parallel-to-serial conversion at the P/S converter 532, a CP is inserted thereinto at the CP inserting section 533, and output to the D/A converter 516. The CP inserting section 533 copies the final portion of an OFDM symbol, and inserts into the first portion of the OFDM symbol, thereby allowing the OFDM signal not to receive adverse effects due to time dispersion in the wireless channel.

The D/A converter 516 converts the signal input from the IFFT section 515 into an analog signal, and outputs the signal converted into a continuous signal to the up converter 518.

The up converter 518 generates a carrier band signal by being multiplied by the carriers output from the local signal generating section 517, and outputs to the switch 578.

The switch 578 controls input from the up converter 518 to the transmission amplifier 519 by the selection control section 577. For example, in the event that the selection control section 577 has selected to operate in the femto mode, and has performed control so as to perform communication employing the communication function section, the switch 578 inputs the output signal from the up converter 518 to the transmission amplifier 519. In the event that the selection control section 577 has selected to operate in the repeater mode, and has performed control so as to perform communication employing the wireless relay function section, the switch 578 suppresses the output signal from the up converter 518 without inputting to the transmission amplifier 519.

At the wireless relay function section 540, the received signal is input to the duplexer 542 via the base station antenna 541, and the duplexer 542 is for sharing a transmission/reception antenna using one antenna, and electrically separates into a transmission path and a reception path.

The reception amplifier 543 is, for example, an LNA (Low Noise Amplifier), amplifies the signal input from the duplexer 542, and outputs to the switch 578.

The switch 578 controls input from the reception amplifier 543 to the transmission amplifier 519 by the selection control section 577. For example, in the event that the selection control section 577 has selected to operate in the femto mode, and has performed control so as to perform communication employing the communication function section, the switch 578 suppresses the output signal from the reception amplifier 543 without inputting to the transmission amplifier 519. In the event that the selection control section 577 has selected to operate in the repeater mode, and has performed control so as to perform communication employing the wireless relay function section, the switch 578 inputs the output signal from the reception amplifier 543 to the transmission amplifier 519.

The transmission amplifier 519 is, for example, an AMP (Amplifier), amplifies the signal input from the switch 578, and transmits to a mobile station via the duplexer 520 and mobile station antenna 521.

1.4.2 Uplink

Next, uplink communication according to the first embodiment will be described.

The signal received via the mobile station antenna 521 is output to the reception amplifier 522 via the duplexer 520.

The reception amplifier 522 amplifies the signal input from the duplexer 520, and outputs to the switch 579. The switch 579 inputs the signal from the reception amplifier 522 to the down converter 523 or transmission amplifier 544 in accordance with the control signal from the selection control section 577.

In the event that, with the communication function section 510, the selection control section 577 has selected to operate in the femto mode, and has performed control so as to perform communication employing the communication function section, the switch 579 outputs the output signal from the reception amplifier 522 to the down converter 523. Upon the signal being input from the switch 579, the down converter 523 subjects the signal to down conversion to a baseband signal using the local signal input from the local signal generating section 517, and then outputs to the A/D converter 524. Upon the signal being input from the down converter 523, the A/D converter 524 converts the signal into a digital signal, and outputs to the FFT section 525.

The FFT section 525 includes the CP removing section 534, S/P converter 535, FFT converter 536, and P/S converter 537. The CP removing section 534 removes a CP appended to the signal, and outputs to the S/P converter 535. The S/P converter 535 subjects the signal input from the CP removing section 534 to serial-to-parallel conversion, and outputs to the FFT converter 536. The FFT converter 536 transforms the signal from a sampled value to a complex symbol using discrete Fourier transform, and outputs to the P/S converter 537. The P/S converter 537 performs parallel-to-serial conversion, and outputs to the RS extracting section 526 and demodulating section 528.

The RS extracting section 526 extracts a RS signal inserted for synchronous detection, and outputs to the channel estimating section 527. The channel estimating section 527 estimates the temporal and frequency changes of a radio propagation path based on the RS signal input from the RS extracting section 526.

The demodulating section 528 corrects radio propagation distortion by subtracting radio propagation change input from the channel estimating section 527 from the modulated signal input from the FFT section 525, and outputs to the decoder 529. The decoder 529 decodes the signal input from the demodulating section 528. For example, Viterbi decoding or the like is employed.

The MAC processing section 511 and High Layer processing section 512 convert the signal input from the decoder 529 into a signal within an IP network. In the event that the selection control section 577 has selected to operate in the repeater mode, and has performed control so as to perform communication employing the wireless relay function section, the MAC processing section 511 and High Layer processing section 512 perform control so as not to transmit illegal signals for a cable network within the IP network.

With the wireless relay function section 540, in the event that the selection control section 577 has selected to operate in the repeater mode, and has performed control so as to perform communication employing the wireless relay function section, the switch 579 inputs the output signal from the reception amplifier 522 to the transmission amplifier 544.

The transmission amplifier 544 transmits the signal to a macro base station via the duplexer 542 and base station antenna 541.

1.5 Switching Processing between Femto Mode and Repeater Mode

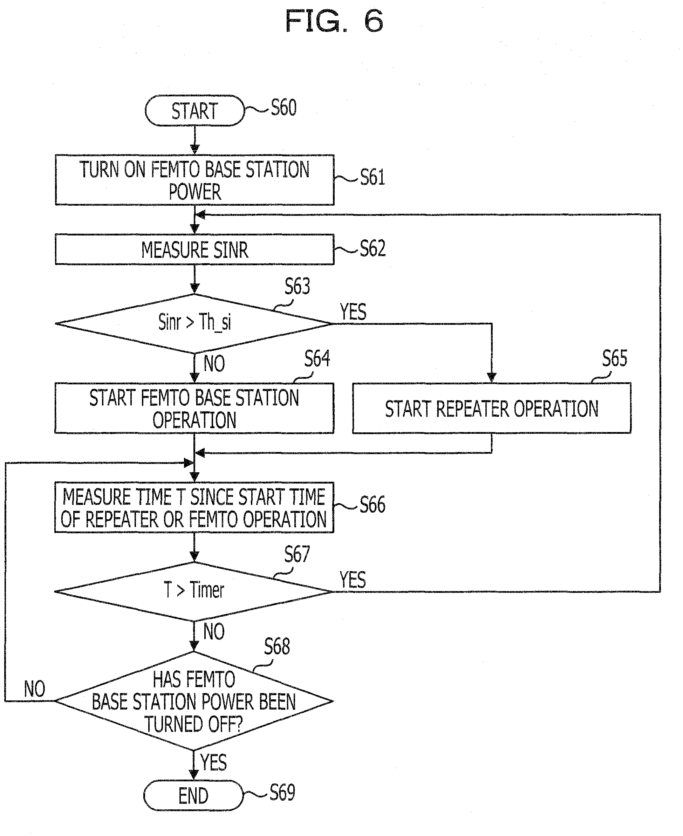

FIG. 6 is a flowchart illustrating switching operation and processing between the femto mode and the repeater mode at the femto base station according to the first embodiment.

With the femto base station, after installation (S60), upon the power of the femto base station being turned on (S61), the SINR measuring section 576 measures the downlink SINR at the installation location using the following Expressions (1) through (3) (S62). At this time, let us say that the maximum of the signals from the macro base station is taken as a signal S, and the total of signals from other base stations than that is taken as interference I.

$$S = \max(S_i) \qquad (1)$$

$$I = \sum_{i=1}^{N} (S_i) - S \qquad (2)$$

$$SINR = S /(I + n) \qquad (3)$$

Based on the measurement result of the SINR, the selection control section 577 selects either the femto mode or the repeater mode (S63). At this time, the selection control section 577 selects the femto mode in the event that the SINR is smaller than a threshold, and performs control so as to operate as a femto base station by performing communication employing the communication function section (S64), and in the event that the SINR is greater than the threshold, selects the repeater mode, and performs control so as to operate as a repeater by performing communication employing the wireless relay function section (S65).

Next, upon starting the operation of the femto mode or repeater mode, the SINR measuring section 576 measures time since operation start time (S66).

After the femto base station has started the operation of the femto mode or repeater mode, the SNIR measuring section 576 determines whether or not given time has elapsed (S67). In the event that the given time has elapsed, the SINR measuring section 576 returns to step S62, and measures the SINR again (S62). Also, in the event that the given time has not elapsed, the SINR measuring section 576 confirms the power on/off of the femto base station (S68).

In the event that the power of the femto base station is in an on state, the SINR measuring section 576 returns to step S66, and measures point-in-time since the operation start time of the femto mode or repeater mode again (S66). The switching operation and processing in the femto mode and repeater mode is ended at the time the power of the femto base station being turned off (S69).

Also, when switching from the repeater mode to the femto mode, and when switching from the femto mode to the repeater mode, a mobile station connected to this femto base station performs handover, thereby switching communication. At this time, handover may be carried out, or a femto base station or macro base station may perform control by this mobile station informing a handover request to a femto base station or macro base station. In the event that this mobile station has connected to a macro base station, the macro base station performs scheduling including this mobile station to start communication, thereby reducing interference with another mobile station,

1.7 Simulation Results

Under given conditions, simulation results regarding a SINR switching point (above threshold) for activating the repeater function will be indicated here. SINRs were measured under conditions of downlink, bandwidth: 5 [MHz], MIMO: 2 x 2MIMO, and phasing model: EPA5.

1. In the case of assuming that the repeater operation is activated when SINR ≥ 10 [dB], and the femto operation is activated when SINR < 10 [dB]

In the event that the repeater operation was activated at the boundary of SINR = 10 [dB], the throughput was the maximum 9.7 [Mbps].

In the event that the femto operation was activated at the boundary of SINR = 10 [dB], the throughput was the maximum 30.0 [Mbps], but there was interference as to the outside, and there was deterioration in throughput as to another UE.

2. In the case of assuming that the repeater operation is activated when SINR ≥ 5 [dB], and the femto operation is activated when SINR < 5 [dB]

In the event that the repeater operation was activated at the boundary of SINR = 5 [dB], the throughput was the maximum 6.4 [Mbps].

In the event that the femto operation was activated at the boundary of SINR = 5 [dB], the throughput was the maximum 30.0 [Mbps], but there was interference as to the outside, and there was deterioration in throughput as to another UE.

3. In the case of assuming that the repeater operation is activated when SINR ≥ 0 [dB], and the femto operation is activated when SINR < 0 [dB]

In the event that the repeater operation was activated at the boundary of SINR = 0 [dB], the throughput was the maximum 3.5 [Mbps].

In the event that the femto operation was activated at the boundary of SINR = 0 [dB], the throughput was the maximum 30.0 [Mbps], but there was interference as to the outside, and there was deterioration in throughput as to another UE.

Accordingly, when considering interference as to the outside at the time of the femto operation, and improvement in the throughput of a mobile station for performing communication with this femto base station with repeater operations, a suitable threshold may be set to between SINR = 5 thorough 10 [dB]. However, the above threshold is an example, and the present disclosure is not restricted to this.

According to the first embodiment, the user may freely install a femto base station, and also the throughput of a mobile station for performing communication with this femto base station may be improved, and further, interference as to a mobile station for performing communication with a base station existing outdoors may be reduced.

Second Embodiment

With a second embodiment, a femto base station includes a wireless relay function section and a communication function section, the received signal strength, RSSI (Received Signal Strength Indication) of the installation location of this femto base station is measured, in the event that the measurement result is greater than a threshold, communication employing the wireless relay function section is selected to operate as a repeater, and in the event that the measurement result is smaller than the threshold, communication employing the communication function section is selected to operate as a femto base station. The present embodiment differs from the first embodiment in that the measurement result of RSSI is employed as a measurement method used at the time of selecting operation.

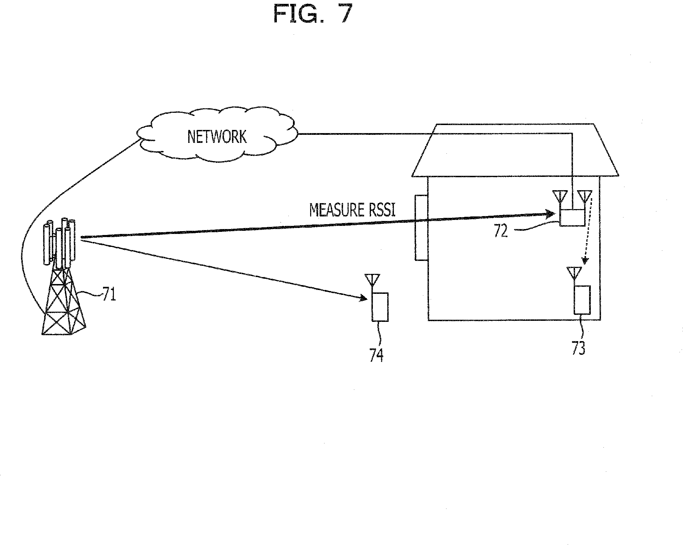

Details regarding the second embodiment will be described with reference to FIGs. 7 through 11.

2.1 Overview

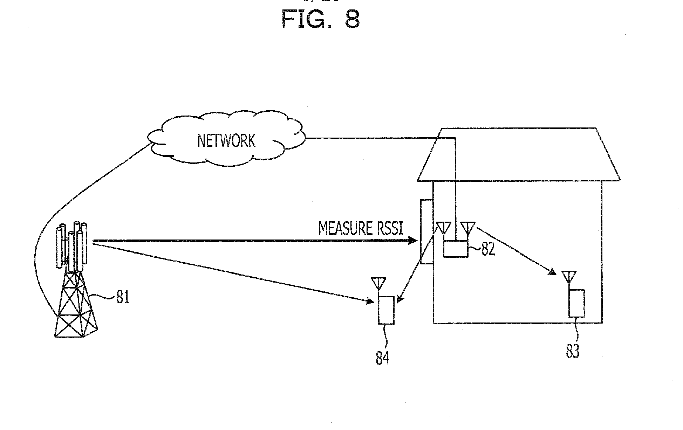

FIGs. 7 and 8 are overviews according to the second embodiment. The femto base station 72 in FIG. 7 performs communication employing a later-described communication function section, thereby operating as a femto base station, and the femto base station 82 in FIG. 8 performs communication employing a later-described wireless relay function section, thereby operating as a repeater.

FIG. 7 is an overview illustrating a scene where a femto base station according to the second embodiment performs communication employing the communication function section, thereby operating as a femto base station. For example, let us say that the femto base station 72 according to the second embodiment is installed in the back of a room which is a blind zone, or the like, and the value of RSSI as to the macro base station 71 in the installation location is smaller than a threshold. In this case, the femto base station 72 according to the second embodiment performs communication according to the communication function section, thereby operating as a femto base station. Note that the threshold may freely be set by a person skilled in the art performing simulation or the like.

Since the installation location of the femto base station 72 according to the second embodiment is a location where the RSSI as to the macro base station 71 is small, it may be conceived that the signal received from the macro base station 71 is weak, and overlapping between the cell range of the macro base station 71, and the cell range of the femto base station 72 is small. Accordingly, it may be conceived that interference affected by the femto base station 72 as to the mobile station 74 connected to the macro base station 71 is small. Further, communication with sufficient throughput may be provided to even the mobile station 73 connected to the femto base station 72 according to the second embodiment using communication employing the communication function section.

Next, FIG. 8 is an overview illustrating a scene where the femto base station according to the second embodiment performs communication employing the wireless relay function section, thereby operating as a repeater. In FIG. 8, let us say that a femto base station 82 according to the second embodiment has been installed by the window of a room which is not a blind zone, or the like, and the RSSI as to the macro base station 81 in the installation location is great. In this case, the femto base station 82 according to the second embodiment starts operation in the repeater mode, and performs communication employing the wireless relay function section, thereby operating as a repeater.

In this case, since the installation location of the femto base station 82 according to the second embodiment is a location where the RSSI as to the macro base station 81 is great, it may be conceived that the signal received from the macro base station 81 is strong, and overlapping between the cell ranges of the macro base station 81 and femto base station 82 is great. Accordingly, it may be conceived that upon the femto base station 82 operating in the femto mode, interference affected by the femto base station 82 as to the mobile station 84 connected to the macro base station 81 is great.

Accordingly, interference as to the mobile station 84 connected to the macro base station 81 may be reduced by the femto base station 82 operating in the repeater mode. Further, even in a case where the femto base station 82 of the second embodiment performs repeater operations, upon receiving the signal of the macro base station 81 via the femto base station 82 which operates in the repeater mode, the mobile station 83 switches to communication with the macro base station 81 to perform communication with the macro base station 81 via the femto base station 82 which operates in the repeater mode. Further, the femto base station 82 which operates in the repeater mode amplifies the signal received from the macro base station 81 to relay to the mobile station 83, amplifies the signal received from the mobile station 83 to relay to the macro base station 81, and accordingly, communication with sufficient throughput may also be provided to the mobile station 83.

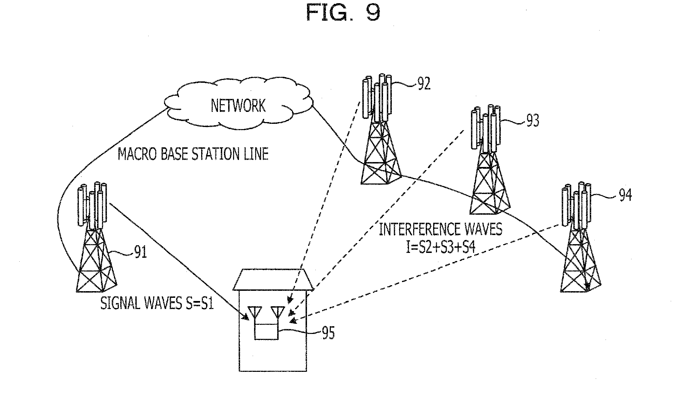

Now, description will be made regarding RSSI with reference to FIG. 9. With the second embodiment, RSSI is the received signal strength of a wireless signal that a femto base station receives from another base station. Here, RSSI as to a macro base station 91 for a femto base station 95 indicates received power strength by regarding the signals from a macro base station 92, a macro base station 93, and a macro base station 94 as interference waves. With RSSI, only a signal with the received power at the femto base station 95 indicating the maximum value is taken into consideration, and other interference waves are not taken into consideration.

RSSI is expressed with "the power value (S1) of a signal wave (radio wave from the macro base station 91)". As may be understood from the above expressions, it may be found that a location with high RSSI strongly receives signal waves from the macro base station 91. Accordingly, it may be understood that upon the femto base station 95 radiating radio waves from a location with high RSSI, the radiated radio waves become strong interference, and interference becomes great for a mobile station which exists around thereof and performs communication with the macro base station 91.

On the contrary, it may be found that at a location with low RSSI the signal waves received from the macro base station 91 are weak. Accordingly, upon the femto base station 95 radiating radio waves from a location with low RSSI, communication of a mobile station existing in a blind zone may be covered with the radiated radio waves.

That is to say, at a location with high RSSI the peripheral RSSI may be kept high by installing a repeater. Further, at a location with low RSSI, by installing a femto base station, a mobile station may communicate with the femto base station 95 while increasing the RSSI as to the femto base station of a peripheral mobile station in a station in which interference as to the outside is small, and keeping the RSSI of the femto base station 95 high.

2.2 Configuration

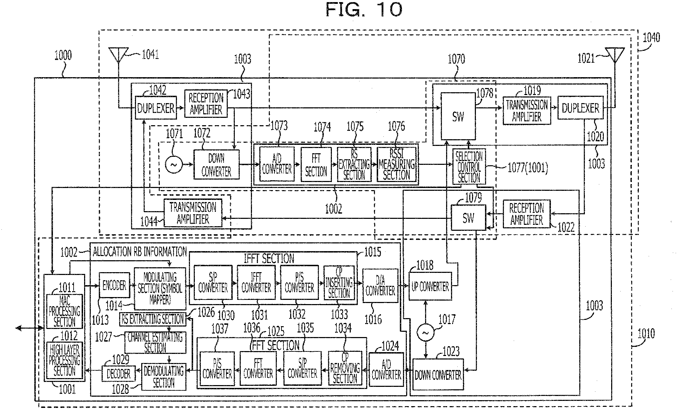

FIG. 10 is a function block diagram/hardware configuration diagram of a femto base station according to the second embodiment. Note that, though description will be made with OFDM modulation as an example, the present disclosure is not restricted to OFDM modulation.

As illustrated in FIG. 10, a femto base station 1000 according to the second embodiment includes a communication function section 1010, a wireless relay function section 1040, and a switching control section 1070.

The communication function section 1010 includes an MAC processing section 1011, a High Layer processing section 1012, an encoder 1013, a modulating section 1014, an IFFT section 1015, a D/A converter 1016, a local signal generating section 1017, an up converter 1018, a switching control section 1070, a transmission amplifier 1019, a duplexer 1020, a mobile station antenna 1021, a reception amplifier 1022, a down converter 1023, an A/D converter 1024, an FFT section 1025, a RS extracting section 1026, a channel estimating section 1027, a demodulating section 1028, and a decoder 1029. Also, the IFFT section 1015 includes an S/P converter 1030, an IFFY converter 1031, a P/S converter 1032, and a CP inserting section 1033. The FFT section 1025 includes a CP removing section 1034, an S/P converter 1035, an FFT converter 1036, and a P/S converter 1037.

In the same way as with the first embodiment, the communication function section 1010 having the above configuration converts a data signal received from the core network via a general line into a wireless signal to transmit to a mobile station, and converts a wireless signal received from the mobile station into a data signal to transmit to the core network, thereby realizing the function of the femto mode for performing communication with the mobile station.

The wireless relay function section 1040 includes a base station antenna 1041, a duplexer 1042, a reception amplifier 1043, a switching control section 1070, a transmission amplifier 1019, a duplexer 1020, a mobile station antenna 1021, a reception amplifier 1022, and a transmission amplifier 1044. Also, the switching control section 1070, transmission amplifier 1019, reception amplifier 1022, duplexer 1020, and mobile station antenna 1021 in the communication function section 1010 are the same as those described above.

The wireless relay function section 1040 having the above configuration realizes, in the same way as with the first embodiment, the same function of a repeater for performing control so as to relay a wireless signal to be transmitted/received between another base station and a mobile station.

The switching control section 1070 includes a local signal generating section 1071, a down converter 1072, an A/D converter 1073, an FFT section 1074, a RS extracting section 1075, a RSSI measuring section 1076, a selection control section 1077, a switch 1078, and a switch 1079. Also, the switching control section 1070 is the switching control section 1070 which the above communication function section 1010 and wireless relay function section 1040 include.

The switching control section 1070 having the above configuration realizes a function wherein the reception level of a wireless signal received from another base station is measured, one of the femto mode that is communication employing the above communication function section 1010, and the repeater mode that is communication employing the wireless relay function section 1040 is selected based on the reception level of the measured wireless signal, thereby switching to the selected mode. With the second embodiment, the switching control section 1070 measures RSSI as the reception level of the wireless signal received from the other base station, selects one of the femto mode and repeater mode based on the value of the measured RSSI, and switches to the selected mode,

Also, the MAC processing section 1011, High Layer processing section 1012, and selection control section 1077 are included in a CPU 1001, and the encoder 1013, modulating section 1014, IFFT section 1015, D/A converter 1016, A/D converter 1024, FFT section 1025, RS extracting section 1026, channel estimating section 1027, demodulating section 1028, decoder 1029, A/D converter 1073, FFT section 1074, RS extracting section 1075, and RSSI measuring section 1076 are included in a DSP 1002, and other than those are RF components 1003.

2.3 Switching Control

Now, detailed description will be made regarding the switching control section 1070.

Upon receiving a high-frequency signal via the base station antenna 1041, duplexer 1042, and reception amplifier 1043, the down converter 1072 subjects the received signal to down conversion to a baseband signal using the local signal input from the local signal generating section 1071 to reduce load at digital processing,

The A/D converter 1073 converts the input signal (analog signal) from the down converter 1072 into a digital signal, and outputs to the FFT section 1074. The FFT section 1074 transforms the discrete sequence of a temporal area into the discrete spectrum of a frequency region.

The RS extracting section 1075 extracts a RS signal, and outputs to the RSSI measuring section 1076.

The RSSI measuring section 1076 measures a RSSI value at the own femto base station from the input signal from the RS extracting section 1075, and outputs the measurement result to the selection control section 1077.

The selection control section 1077 selects whether to operate in the femto mode or repeater mode based on the input from the RSSI measuring section 1076, and controls the switches 1078 and 1079 based on the selected result.

For example, in the event that the RSSI is a smaller value than a threshold, the selection control section 1077 selects to operate in the femto mode, and outputs a control signal to the switches 1078 and 1079 so as to perform communication employing the communication function section. On the contrary, in the event that the RSSI is a greater value than the threshold, the selection control section 1077 selects to operate in the repeater mode, and outputs a control signal to the switches 1078 and 1079 so as to perform communication employing the wireless relay function section.

2.4.1 Downlink

Now, downlink communication according to the second embodiment will be described.

With the communication function section 1010, the data signal received via the MAC processing section 1011 and High Layer processing section 1012 is output to the encoder 1013. The encoder 1013 outputs an encoded signal to the modulating section 1014.

The modulating section 1014 converts a data bit string to be transmitted into a complex symbol string for modulating the carriers, and outputs to the IFFT section 1015.

The complex symbol string input from the modulating section 1014 is accumulated in the S/P converter 1030, and collectively transformed by inverse discrete Fourier transform at the IFFT converter 1031, thereby generating sampled values. Further, the obtained sampled values are subjected to parallel-to-serial conversion at the P/S converter 1032, a CP is inserted thereinto at the CP inserting section 1033, and output to the D/A converter 1016.

The D/A converter 1016 converts the signal input from the IFFT section 1015 into an analog signal, and outputs the signal converted into a continuous signal to the up converter 1018.

The up converter 1018 generates a carrier band signal by being multiplied by the carriers output from the local signal generating section 1017, and outputs to the switch 1078.

The switch 1078 controls input from the up converter 1018 to the transmission amplifier 1019 by the selection control section 1077. For example, in the event that the selection control section 1077 has selected to operate in the femto mode, and has performed control so as to perform communication employing the communication function section, the switch 1078 inputs the output signal from the up converter 1018 to the transmission amplifier 1019. In the event that the selection control section 1077 has selected to operate in the repeater mode, and has performed control so as to perform communication employing the wireless relay function section, the switch 1078 suppresses the output signal from the up converter 1018 without inputting to the transmission amplifier 1019.

At the wireless relay function section 1040, the received signal is input to the duplexer 1042 via the base station antenna 1041, and output to the reception amplifier 1043.

The reception amplifier 1043 amplifies the signal input from the duplexer 1042, and outputs to the switch 1078.

The switch 1078 controls input from the reception amplifier 1043 to the transmission amplifier 1019 by the selection control section 1077. For example, in the event that the selection control section 1077 has selected to operate in the femto mode, and has performed control so as to perform communication employing the communication function section, the switch 1078 suppresses the output signal from the reception amplifier 1043 without inputting to the transmission amplifier 1019. In the event that the selection control section 1077 has selected to operate in the repeater mode, and has performed control so as to perform communication employing the wireless relay function section, the switch 1078 inputs the output signal from the reception amplifier 1043 to the transmission amplifier 1019.

The transmission amplifier 1019 amplifies the signal input from the switch 1078, and transmits to a mobile station via the duplexer 1020 and mobile station antenna 1021.

2.4.2 Uplink

Next, uplink communication according to the second embodiment will be described.

The signal received via the mobile station antenna 1021 is output to the reception amplifier 1022 via the duplexer 1020.

The reception amplifier 1022 amplifies the signal input from the duplexer 1020, and outputs to the switch 1079. The switch 1079 inputs the signal from the reception amplifier 1022 to the down converter 1023 or transmission amplifier 1044 in accordance with the control signal from the selection control section 1077.

In the event that, with the communication function section 1010, the selection control section 1077 has selected to operate in the femto mode, and has performed control so as to perform communication employing the communication function section, the switch 1079 outputs the output signal from the reception amplifier 1022 to the down converter 1023. Upon the signal being input from the switch 1079, the down converter 1023 subjects the signal to down conversion to a baseband signal using the local signal input from the local signal generating section 1017, and then outputs to the A/D converter 1024. Upon the signal being input from the down converter 1023, the A/D converter 1024 converts the signal into a digital signal, and outputs to the FFT section 1025.

The CP removing section 1034 removes a CP appended to the signal, and outputs to the S/P converter 1035. The S/P converter 1035 subjects the signal input from the CP removing section 1034 to serial-to-parallel conversion, and outputs to the FFT converter 1036. The FFT converter 1036 transforms the signal from a sampled value to a complex symbol using discrete Fourier transform, and outputs to the P/S converter 1037. The P/S converter 1037 performs parallel-to-serial conversion, and outputs to the RS extracting section 1026 and demodulating section 1028.

The RS extracting section 1026 extracts a RS signal, and outputs to the channel estimating section 1027. The channel estimating section 1027 estimates the temporal and frequency changes of a radio propagation path based on the RS signal input from the RS extracting section 1026.

The demodulating section 1028 corrects radio propagation distortion by subtracting radio propagation change input from the channel estimating section 1027 from the modulated signal input from the FFT section 1025, and outputs to the decoder 1029.

The decoder 1029 decodes the signal input from the demodulating section 1028, and outputs to the MAC processing section 1011 and Higher Layer processing section 1012. The MAC processing section 1011 and High Layer processing section 1012 convert the signal input from the decoder 1029 into a signal within an IP network. In the event that the selection control section 1077 has selected to operate in the repeater mode, and has performed control so as to perform communication employing the wireless relay function section, the MAC processing section 1011 and High Layer processing section 1012 perform control so as not to transmit illegal signals for a cable network within the IP network.

With the wireless relay function section 1040, in the event that the selection control section 1077 has selected to operate in the repeater mode, and has performed control so as to perform communication employing the wireless relay function section, the switch 1079 inputs the output signal from the reception amplifier 1022 to the transmission amplifier 1044.

The transmission amplifier 1044 transmits the signal to a macro base station via the duplexer 1042 and base station antenna 1041.

2.5 Switching Processing between Femto Mode and Repeater Mode

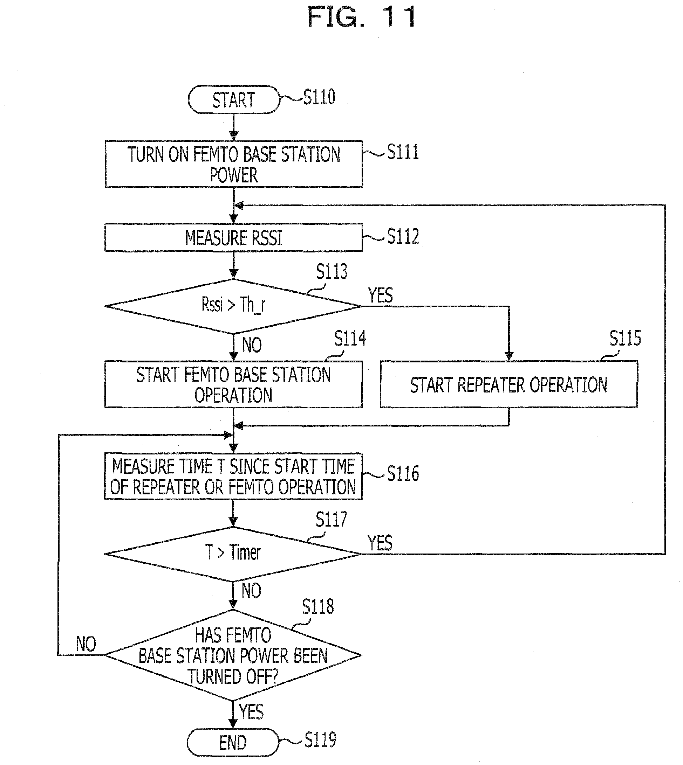

FIG. 11 is a flowchart illustrating switching operation and processing between the femto mode and the repeater mode at the femto base station according to the second embodiment.

After installation of the femto base station (S110), upon the power of the femto base station being turned on (S111), the RSSI measuring section 1076 measures the downlink RSSI at the installation location using the following Expression (4) (S112). At this time, let us say that the maximum of the signals from the macro base station is taken as a signal S.

$$RSSI = S \qquad (4)$$

Based on the measurement result of the RSSI, the selection control section 1077 selects either the femto mode or the repeater mode (S113). At this time, the selection control section 1077 selects the femto mode in the event that the RSSI is smaller than a threshold, and performs control so as to operate as a femto base station by performing communication employing the communication function section (S114), and in the event that the RSSI is greater than the threshold, selects the repeater mode, and performs control so as to operate as a repeater by performing communication employing the wireless relay function section (S115).

Next, upon starting the operation of the femto mode or repeater mode, the RSSI measuring section 1076 measures time since operation start time (S116).

After the femto base station has started the operation of the femto mode or repeater mode, the RSSI measuring section 1076 determines whether or not given time has elapsed (S117). In the event that the given time has elapsed, the RSSI measuring section 1076 returns to step S112, and measures the RSSI again (S112). Also, in the event that the given time has not elapsed, the RSSI measuring section 1076 confirms the power on/off of the femto base station (S118).

In the event that the power of the femto base station is in an on state, the RSSI measuring section 1076 returns to step S116, and measures point-in-time since the operation start time of the femto mode or repeater mode again (S116). The switching operation and processing in the femto mode and repeater mode is ended at the time the power of the femto base station being turned off (S119).

Also, when switching from the repeater mode to the femto mode, and when switching from the femto mode to the repeater mode, a mobile station connected to this femto base station performs handover, thereby switching communication. At this time, handover may be carried out, or a femto base station or macro base station may perform control by this mobile station informing a handover request to a femto base station or macro base station. In the event that this mobile station has connected to a macro base station, the macro base station performs scheduling including this mobile station to start communication, thereby reducing interference with another mobile station.

According to the second embodiment, the user may freely install a femto base station, and also improve the throughput of a mobile station for performing communication with the femto base station, and further reduce interference as to a mobile station for performing communication with the base station existing outdoors.

Third Embodiment

With a third embodiment, a femto base station includes a wireless relay function section and a communication function section, the SINR of the installation location of this femto base station is measured, and in the event that the measurement result is greater than a threshold, communication employing the wireless relay function section is selected, and the femto base station operates as the repeater mode, and in the event that the measurement result is smaller than the threshold, communication employing the communication function section is selected, and the femto base station operates as the femto mode.

Further, in the event that communication selected by a first measurement result, and communication selected by a second measurement result measured after elapse of given time since the first measurement differ, the femto base station performs communication employing both of communication employing the wireless relay function section, and communication employing the communication function section, and then switches to the communication selected by the second measurement result.

That is to say, at the time of switching from the femto mode to the repeater mode, the femto base station performs communication employing both of the wireless relay function section and communication function section, and then performs communication employing the wireless relay function section, thereby switching from the femto mode to the repeater mode.

Also, at the time of switching from the repeater mode to the femto mode, the femto base station performs communication employing both of the wireless relay function section and communication function section, and then performs communication employing the communication function section, thereby switching from the repeater mode to the femto mode.

The third embodiment differs from the first and second embodiments in that the operation mode is switched not instantly but gradually.

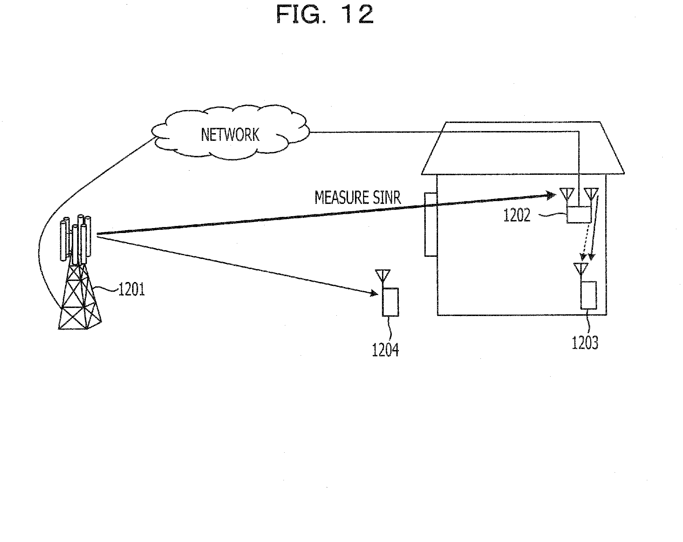

Details regarding the third embodiment will be described with reference to FIGs. 12 through 17.

3.1 Overview

FIGs. 12 through 15 are overviews according to the third embodiment.

FIG. 12 is an overview in the event that the femto base station according to the third embodiment has executed switching from the repeater mode to the femto mode.

For example, let us say that the user has moved a femto base station 1202 according to the third embodiment from a location with high SINR as to a macro base station 1201 such as by the window which is not a complete blind zone or the like to a location with small SINR as to the macro base station 1201 such as the back of a room which is a blind zone or the like. In this case, the femto base station 1202 according to the third embodiment starts the operation of the femto mode while gradually stopping the operation of the repeater mode, and finally operates as a femto base station for performing communication employing the communication function section.

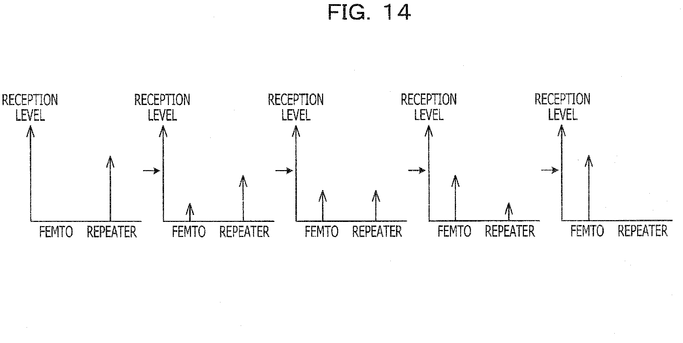

Also, FIG. 14 illustrates change in the reception level from the femto base station 1202 at the mobile station 1203 at the time of switching the operation of the femto base station 1202 in FIG. 12.

As illustrated in FIGs. 12 and 14, the mobile station 1203 is communicating with the macro base station 1201 via the femto base station 1202 which is operating as a repeater. Upon the femto base station 1202 selecting the femto mode, staring the operation of the femto mode, and the signal of the femto base station 1202 which is performing communication employing the communication function section being able to be received, the mobile station 1203 adds communication with the femto base station 1202, and perform communication with the macro base station 1201 and femto base station 1202 simultaneously. Upon the signal from the macro base station 1201 being weakened, the mobile station 1203 releases communication with the macro base station, and continues communication with the femto base station which is performing communication employing the communication function section.

The femto base station 1202 according to the third embodiment is characterized by switching the operation not instantly but gradually. At the time of switching the operation from the repeater mode to the femto mode, the femto base station 1202 according to the third embodiment simultaneously connects to a base station witch is a switching destination, and releases communication with a base station before switching after completing connection with the switching destination base station. Thus, handover may be performed without instantaneous interruption. Accordingly, it may be reduced for a mobile station that a probability that communication interruption will occur.

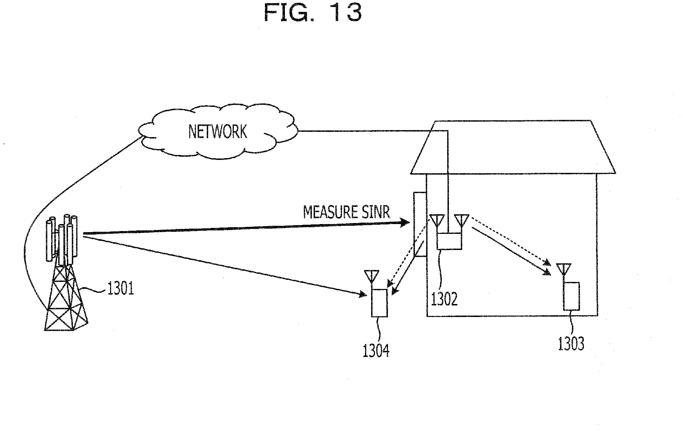

FIG. 13 is an overview in the event that the femto base station according to the third embodiment has executed switching from the femto mode to the repeater mode.

For example, let us say that the user has moved a femto base station 1302 according to the third embodiment from a location with small SINR as to a macro base station 1301 such as the back of a room which is a blind zone or the like to a location with great SINR as to the macro base station 1301 such as by the window which is not a complete blind zone or the like. In this case, the femto base station 1302 according to the third embodiment gradually starts the operation of the repeater mode while gradually stopping the operation of the femto mode, and finally operates as a repeater for performing communication employing the wireless relay function section.

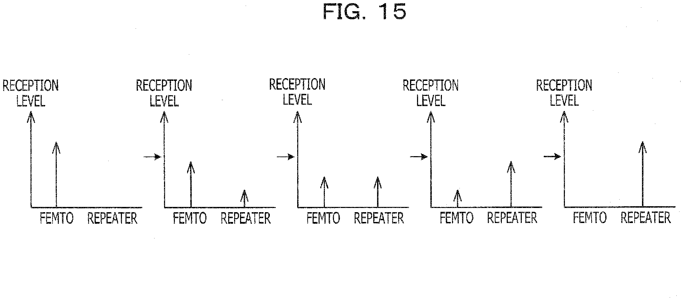

Also, FIG. 15 illustrates change in the reception power level from the femto base station 1302 at the mobile station 1303 at the time of switching the operation of the femto base station 1302 in FIG. 13.

The femto base station 1302 according to the third embodiment is characterized by gradually switching the operation as illustrated in FIG. 14. The femto base station 1302 according to the third embodiment may reduce a possibility that communication interruption will occur at the time of switching the operation from the femto mode to the repeater mode.

3.2 Configuration

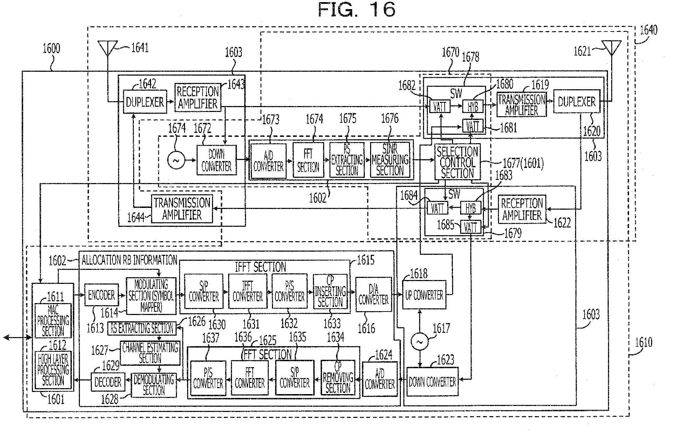

FIG. 16 is a function block diagram/hardware configuration diagram of a femto base station according to the third embodiment. Note that, though description will be made with OFDM modulation as an example, the present disclosure is not restricted to OFDM modulation.

As illustrated in FIG. 16, a femto base station 1600 according to the third embodiment includes a communication function section 1610, a wireless relay function section 1640, and a switching control section 1670.

The communication function section 1610 includes an MAC processing section 1611, a High Layer processing section 1612, an encoder 1613, a modulating section 1614, an IFFT section 1615, a D/A converter 1616, a local signal generating section 1617, an up converter 1618, a switching control section 1670, a transmission amplifier 1619, a duplexer 1620, a mobile station antenna 1621, a reception amplifier 1622, a down converter 1623, an A/D converter 1624, an FFT section 1625, a RS extracting section 1626, a channel estimating section 1627, a demodulating section 1628, and a decoder 1629. Also, the IFFT section 1615 includes an S/P converter 1630, an IFFT converter 1631, a P/S converter 1632, and a CP inserting section 1633. The FFT section 1625 includes a CP removing section 1634, an S/P converter 1635, an FFT converter 1636, and a P/S converter 1637.

The wireless relay function section 1640 includes a base station antenna 1641, a duplexer 1642, a reception amplifier 1643, a switching control section 1670, a transmission amplifier 1619, a duplexer 1620, a mobile station antenna 1621, a reception amplifier 1622, and a transmission amplifier 1644. Also, the switching control section 1670, transmission amplifier 1619, reception amplifier 1622, duplexer 1620, and mobile station antenna 1621 in the communication function section 1610 are the same as those described above.

The switching control section 1670 includes a local signal generating section 1671, a down converter 1672, an A/D converter 1673, an FFT section 1674, a RS extracting section 1675, an SINR measuring section 1676, a selection control section 1677, a switch 1678, and a switch 1679. The switch 1678 includes a synthesizer 1680, a variable resistor 1681, and a variable resistor 1682, and the switch 1679 includes a synthesizer 1683, a variable resistor 1684, and a variable resistor 1685. Also, the switching control section 1670 is the switching control section 1670 which the above communication function section 1610 and wireless relay function section 1640 include.

The switching control section 1670 having the above configuration realizes a function for gradually switching the above femto function and repeater function according to given conditions.

Also, the MAC processing section 1611, High Layer processing section 1612, and selection control section 1677 are included in a CPU 1601, and the encoder 1613, modulating section 1614, IFFT section 1615, D/A converter 1616, A/D converter 1624, FFT section 1625, RS extracting section 1626, channel estimating section 1627, demodulating section 1628, decoder 1629, A/D converter 1673, FFT section 1674, RS extracting section 1675, and SINR measuring section 1676 are included in a DSP 1602, and other than those are RF components 1603.

3.3 Switching Control Section

Now, detailed description will be made regarding the switching control section 1670.

Upon receiving a high-frequency signal via the base station antenna 1641, duplexer 1642, and reception amplifier 1643, the down converter 1672 subjects the received signal to down conversion to a baseband signal using the local signal input from the local signal generating section 1671.

The A/D converter 1673 converts the input signal (analog signal) from the down converter 1672 into a digital signal, and outputs to the FFT section 1674. The FFT section 1674 transforms the discrete sequence of a temporal area into the discrete spectrum of a frequency region.

The RS extracting section 1675 extracts a RS signal, and outputs to the SINR measuring section 1676.

The SINR measuring section 1676 measures an SINR value at the own femto base station from the input signal from the RS extracting section 1675, and outputs the measurement result to the selection control section 1677.

The selection control section 1677 controls whether the switches 1678 and 1679 operate in the femto mode or repeater mode, based on the input from the SINR measuring section 1676.

For example, in the event that the SINR is a smaller value than a threshold, the selection control section 1677 outputs a control signal to the switches 1678 and 1679 so as to operate in the femto mode. On the contrary, in the event that the SINR is a greater value than the threshold, the selection control section 1677 outputs a control signal to the switches 1678 and 1679 so as to operate in the repeater mode.

At this time, the selection control section 1677 outputs the above control signal to each of the variable resistors 1681, 1682, 1684, and 1685.

The variable resistors 1681, 1682, 1684, and 1685 operate based on the input control signal.

For example, in the event that the selection control section 1677 has selected to operate in the femto mode, and has output a control signal so as to perform communication employing the communication function section, the resistance values of the variable resistors 1681 and 1685 are gradually brought close to the minimum value, and the resistance values of the variable resistors 1682 and 1684 are gradually brought close to the maximum value.

Also, in the event that the selection control section 1677 has selected to operate in the repeater mode, and has output a control signal so as to perform communication employing the wireless relay function section, the resistance values of the variable resistors 1681 and 1685 are gradually brought close to the maximum value, and the resistance values of the variable resistors 1682 and 1684 are gradually brought close to the minimum value.

The synthesizer 1680 outputs the signal input via the variable resistors 1681 and 1682 to the transmission amplifier 1619.

The synthesizer 1683 outputs the signal from the reception amplifier 1622 to the variable resistors 1684 and 1685.

3.4.1 Downlink

Now, downlink communication according to the third embodiment will be described.

With the communication function section 1610, the data signal received via the MAC processing section 1611 and High Layer processing section 1612 is output to the encoder 1613. The encoder 1613 outputs an encoded signal to the modulating section 1614.

The modulating section 1614 converts a data bit string to be transmitted into a complex symbol string for modulating the carriers, and outputs to the IFFT section 1615.

The complex symbol string input from the modulating section 1614 is accumulated in the S/P converter 1630, and collectively transformed by inverse discrete Fourier transform at the IFFT converter 1631, thereby generating sampled values. Further, the obtained sampled values are subjected to parallel-to-serial conversion at the P/S converter 1632, a CP is inserted thereinto at the CP inserting section 1633, and output to the D/A converter 1616.

The D/A converter 1616 converts the signal input from the IFFT section 1615 into an analog signal, and outputs the signal converted into a continuous signal to the up converter 1618.

The up converter 1618 generates a carrier band signal by being multiplied by the carriers output from the local signal generating section 1617, and outputs to the switch 1678.

The switch 1678 controls input from the up converter 1618 to the transmission amplifier 1619 by the selection control section 1677. For example, in the event that the selection control section 1677 has selected to operate in the femto mode, and has performed control so as to perform communication employing the communication function section, the resistance value of the variable resistor 1681 is gradually brought close to the minimum value, and the resistance value of the variable resistor 1682 is gradually brought close to the maximum value.

The synthesizer 1680 synthesizes the signal input from the up converter 1618 via the variable resistor 1681, and the signal input from a later-described reception amplifier 1643 via the variable resistor 1682, and outputs to the transmission amplifier 1619.

Thus, the signal from the communication function section 1610 gradually increases, the signal from the wireless relay function section 1640 gradually decreases, and accordingly, handover from the repeater mode to the femto mode is enabled, and no communication interruption occurs.

With the wireless relay function section 1640, the signal received via the base station antenna 1641 is input to the duplexer 1642, and output to the reception amplifier 1643. The reception amplifier 1643 amplifies the signal input from the duplexer 1642, and outputs to the switch 1678.

With regard to the switch 1678, input from the reception amplifier 1643 to the transmission amplifier 1619 is controlled by the selection control section 1677. For example, in the event that the selection control section 1677 has selected to operate in the repeater mode, and has performed control so as to perform communication employing the wireless relay function section, the resistance value of the variable resistor 1681 is gradually brought close to the maximum value, and the resistance value of the variable resistor 1682 is gradually brought close to the minimum value.

The synthesizer 1680 synthesizes the signal input from the reception amplifier 1643 via the variable resistor 1682, and the signal input from the up converter 1618 via the variable resistor 1681, and outputs to the transmission amplifier 1619.

Thus, the signal from the communication function section 1610 gradually decreases, the signal from the wireless relay function section 1640 gradually increases, and accordingly, handover from the femto mode to the repeater mode is enabled, and no communication interruption occurs.

The transmission amplifier 1619 amplifies the signal input from the switch 1678, and transmits to the mobile station via the duplexer 1620 and mobile station antenna 1621.

3.4.2 Uplink

Next, uplink communication according to the third embodiment will be described.

The signal received via the mobile station antenna 1621 is output to the reception amplifier 1622 via the duplexer 1620.

The reception amplifier 1622 amplifies the signal input from the duplexer 1620, and outputs to the switch 1679. The switch 1679 inputs the signal from the reception amplifier 1622 to the down converter 1623 or transmission amplifier 1644 in accordance with the control signal from the selection control section 1677.

With the communication function section 1610, in the event that the selection control section 1677 has selected to operate in the femto mode, and has performed control so as to perform communication employing the communication function section, the resistance value of the variable resistor 1685 is gradually brought close to the minimum value, and the resistance value of the variable resistor 1684 is gradually brought close to the maximum value.

The synthesizer 1683 outputs the signal from the reception amplifier 1622 to the down converter 1623 via the variable resistor 1685. The synthesizer 1683 outputs the signal from the reception amplifier 1622 to the transmission amplifier 1644 via the variable resistor 1684.

Thus, the signal to the communication function section 1610 gradually increases, the signal to the wireless relay function section 1640 gradually decreases, and accordingly, handover from the repeater mode to the femto mode is enabled, and no communication interruption occurs. Upon the signal being input from the switch 1679, the down converter 1623 subjects the signal to down conversion to a baseband signal using the local signal input from the local signal generating section 1617, and then outputs to the A/D converter 1624. Upon the signal being input from the down converter 1623, the A/D converter 1624 converts the signal into a digital signal, and outputs to the IFFT section 1625.

The CP removing section 1634 removes a CP appended to the signal, and outputs to the S/P converter 1635. The S/P converter 1635 subjects the signal input from the CP removing section 1634 to serial-to-parallel conversion, and outputs to the FFT converter 1636. The FFT converter 1636 transforms the signal from a sampled value to a complex symbol using discrete Fourier transform, and outputs to the P/S converter 1637. The P/S converter 1637 performs parallel-to-serial conversion, and outputs to the RS extracting section 1626 and demodulating section 1628.

The RS extracting section 1626 extracts a RS signal inserted for synchronous detection, and outputs to the channel estimating section 1627. The channel estimating section 1627 estimates the temporal and frequency changes of a radio propagation path based on the RS signal input from the RS extracting section 1626.

The demodulating section 1628 corrects radio propagation distortion by subtracting radio propagation change input from the channel estimating section 1627 from the modulated signal input from the FFT section 1625, and outputs to the decoder 1629.

The decoder 1629 decodes the signal input from the demodulating section 1628. The MAC processing section 1611 and High Layer processing section 1612 convert the signal input from the decoder 1629 into a signal within an IP network. In the event that the selection control section 1677 has selected to operate in the repeater mode, and has performed control so as to perform communication employing the wireless relay function section, the MAC processing section 1611 and High Layer processing section 1612 perform control so as not to transmit illegal signals for a cable network within the IP network.

With the wireless relay function section 1640, in the event that the selection control section 1677 has selected to operate in the repeater mode, and has performed control so as to perform communication employing the wireless relay function section, the resistance value of the variable resistor 1685 is gradually brought close to the maximum value, and the resistance value of the variable resistor 1684 is gradually brought close to the minimum value.

The synthesizer 1683 outputs the signal from the reception amplifier 1622 to the transmission amplifier 1644 via the variable resistor 1684. The synthesizer 1683 outputs the signal from the reception amplifier 1622 to the down converter 1623 via the variable resistor 1685.

Thus, the signal to the wireless relay function section 1640 gradually increases, the signal to the communication function section 1610 gradually decreases, and accordingly, handover from the femto mode to the repeater mode is enabled, and no communication interruption occurs.

The transmission amplifier 1644 transmits the signal to a macro base station via the duplexer 1642 and base station antenna 1641.

3.5 Switching Processing between Femto Mode and Repeater Mode

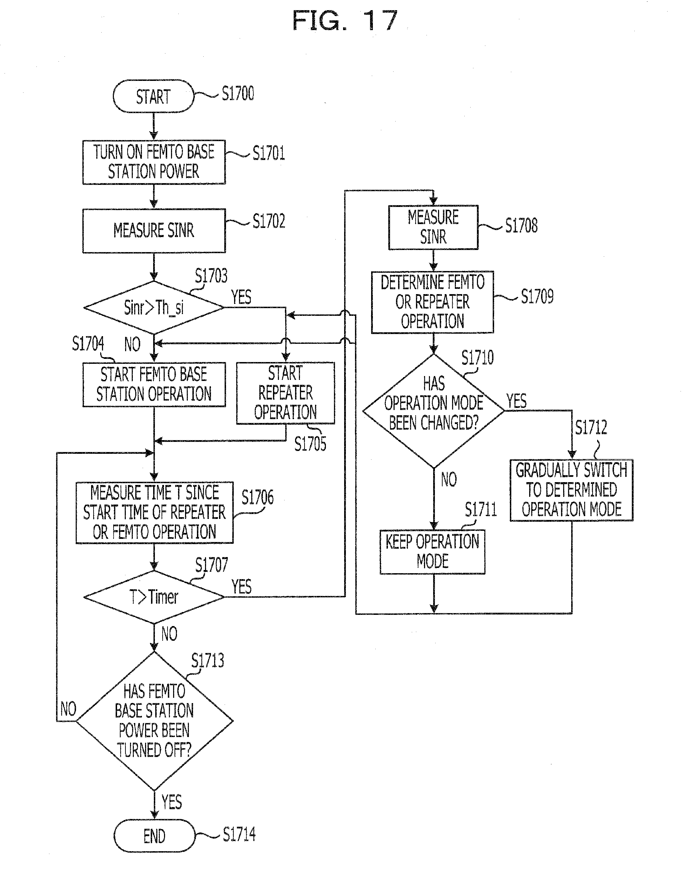

FIG. 17 is a flowchart illustrating switching operation and processing between the femto mode and the repeater mode at the femto base station according to the third embodiment.

After installation of the femto base station (S1700), upon the power of the femto base station being turned on (S1701), the SNIR measuring section 1676 measures the downlink SINR at the installation location (S1702).

The selection control section 1677 selects one of the femto mode and repeater mode based on the measurement result of the SINR (S1703). At this time, in the event that the SINR is smaller than a threshold, the selection control section 1677 selects the femto mode, and performs control so as to operate as a femto base station (S1704), and in the event that the SINR is greater than the threshold, selects the repeater mode, and performs control so as to operate as a repeater (S1705).

Next, the SINR measuring section 1676 measures time since operation start time when starting operation as the femto mode or repeater mode(S1706).

The SINR measuring section 1676 determines whether or not given time has elapsed since the femto base station started operation as the femto mode or repeater mode (S1707). In the event that the given time has elapsed, the SINR measuring section 1676 measures SINR again (S1708). Based on the measurement result of the SINR, the selection control section 1677 determines in which of the femto mode or repeater mode the femto base station operates (S1709). The selection control section 1677 determines whether or not the operation mode determined in step S1709 is the same as the current operation mode (S1710). In the event that the determined operation mode is the same as the current operation mode, the selection control section 1677 operates in the unchanged operation mode (S1711). In the event that the operation mode determined in step S1709 differs from the current operation mode, the selection control section 1677 gradually switches from the current operation mode to the different determined operation mode (S1712).

Also, in the event that the given time has not elapsed in step S1707, the SINR measuring section 1676 confirms whether the power of the femto base station is on or off (S1713).

In the event that the power of the femto base station is on, the SINR measuring section 1676 returns to step S1706, and measures point-in-time since the start operation time of the femto mode or repeater mode (S1706). When the power of the femto base station is turned off, the switching operation and processing of the femto mode and repeater mode are ended (S1714).

Also, when switching from the repeater mode to the femto mode, and when switching from the femto mode to the repeater mode, a mobile station connected to this femto base station performs handover, thereby switching communication. At this time, the mobile station may carry out handover by informing a handover request to the femto base station or macro base station, or the femto base station or macro base station may perform control instead of the mobile station.

According to the third embodiment, the user may freely install a femto base station, and also improve the throughput of a mobile station for performing communication with the femto base station, and further reduce interference as to a mobile station for performing communication with the base station existing outdoors. Further, a probability that the user who connects to the femto base station will have communication interruption may be reduced.

Fourth Embodiment

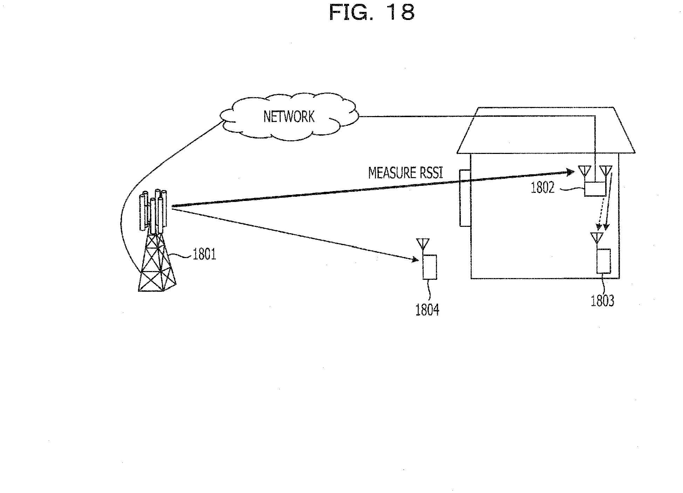

Details regarding a fourth embodiment will be described with reference to FIGs. 18 through 23.

With the fourth embodiment, a femto base station includes a communication function section and a wireless relay function section, the RSSI of the installation location of this femto base station is measured, and in the event that the measurement result is greater than a threshold, the femto base station operates as the repeater mode using the wireless relay function section. Further, when switching from the femto mode to the repeater mode, the femto base station switches the operation from the femto mode to the repeater mode not instantly but gradually.

Also, in the event that the RSSI of the installation location of this femto base station is smaller than the threshold, the femto base station operates as a femto base station using the communication function section. Further, when switching from the repeater mode to the femto mode, the femto base station switches the operation from the repeater mode to the femto mode not instantly but gradually. The fourth embodiment differs from the third embodiment in that the value of RSSI is measured.

4.1 Overview

FIGs. 18 through 21 are overviews according to the fourth embodiment.

FIG. 18 is an overview in the event that the femto base station according to the fourth embodiment has switched from the repeater mode to the femto mode.

For example, let us say that the user has moved a femto base station 1802 according to the fourth embodiment from a location with high RSSI from a macro base station 1801 such as by the window or the like to a location with small RSSI such as the back of a room or the like. In this case, the femto base station 1802 according to the fourth embodiment starts the operation of the femto mode while gradually stopping the operation of the repeater mode, and finally operates as a femto base station.

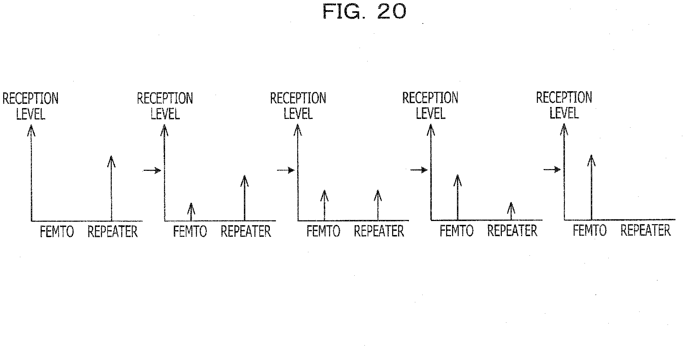

Also, FIG. 20 illustrates change in the reception power level from the femto base station 1802 at a mobile station 1803 at the time of switching the operation of the femto base station 1802 in FIG. 18.

The femto base station 1802 according to the fourth embodiment is **characterized in that** the operation is gradually switched, as illustrated in FIG. 20. The femto base station 1802 according to the fourth embodiment may reduce a probability that communication interruption will occur at the time of switching the operation from the repeater mode to the femto mode.

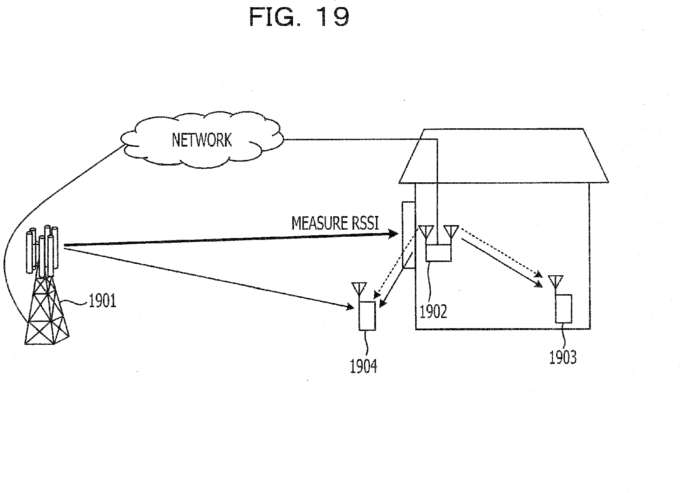

FIG. 19 is an overview in the event that a femto base station according to the fourth embodiment has switched from the femto mode to the repeater mode.

For example, let us say that the user has moved a femto base station 1902 according to the fourth embodiment from a location with small RSSI from a macro base station 1901 such as the back of a room or the like to a location with great RSSI such as by the window or the like. In this case, the femto base station 1902 according to the fourth embodiment gradually starts the operation of the repeater mode, and finally operates as a repeater.

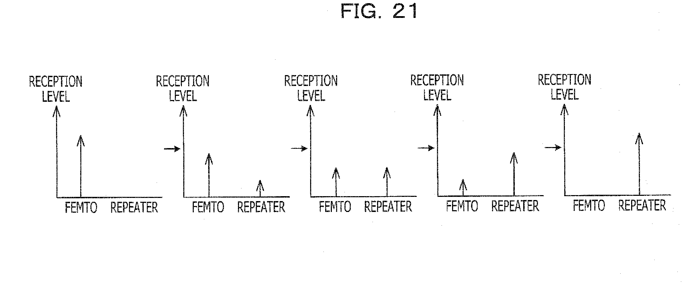

Also, FIG. 21 illustrates change in the reception power level from the femto base station 1902 at a mobile station 1903 at the time of switching the operation of the femto base station 1902 in FIG. 19.

The femto base station 1902 according to the fourth embodiment is **characterized in that** the operation is gradually switched, as illustrated in FIG. 21. The femto base station 1902 according to the fourth embodiment may reduce a probability that communication interruption will occur at the time of switching the operation from the femto mode to the repeater mode.

4.2 Configuration

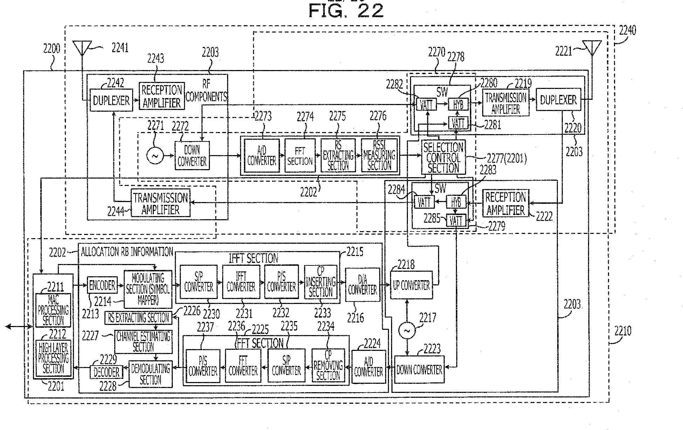

FIG. 22 is a function block diagram/hardware configuration diagram of a femto base station according to the fourth embodiment. Note that, though description will be made with OFDM modulation as an example, the present disclosure is not restricted to OFDM modulation.

As illustrated in FIG. 22, a femto base station 2200 according to the fourth embodiment includes a communication function section 2210, a wireless relay function section 2240, and a switching control section 2270.

The communication function section 2210 includes an MAC processing section 2211, a High Layer processing section 2212, an encoder 2213, a modulating section 2214, an IFFT section 2215, a D/A converter 2216, a local signal generating section 2217, an up converter 2218, a switching control section 2270, a transmission amplifier 2219, a duplexer 2220, a mobile station antenna 2221, a reception amplifier 2222, a down converter 2223, an A/D converter 2224, an FFT section 2225, a RS extracting section 2226, a channel estimating section 2227, a demodulating section 2228, and a decoder 2229. Also, the IFFT section 2215 includes an S/P converter 2230, an IFFT converter 2231, a P/S converter 2232, and a CP inserting section 2233. The FFT section 2225 includes a CP removing section 2234, an S/P converter 2235, an FFT converter 2236, and a P/S converter 2237.

The wireless relay function section 2240 includes a base station antenna 2241, a duplexer 2242, a reception amplifier 2243, a switching control section 2270, a transmission amplifier 2219, a duplexer 2220, a mobile station antenna 2221, a reception amplifier 2222, and a transmission amplifier 2244. Also, the switching control section 2270, transmission amplifier 2219, reception amplifier 2222, duplexer 2220, and mobile station antenna 2221 in the communication function section 2210 are the same as those described above.

The switching control section 2270 includes a local signal generating section 2271, a down converter 2272, an A/D converter 2273, an FFT section 2274, a RS extracting section 2275, a RSSI measuring section 2276, a selection control section 2277, a switch 2278, and a switch 2279. The switch 2278 includes a synthesizer 2280, a variable resistor 2281, and a variable resistor 2282, and the switch 2279 includes a synthesizer 2283, a variable resistor 2284, and a variable resistor 2285. Also, the switching control section 2270 is the switching control section 2270 which the above communication function section 2210 and wireless relay function section 2240 include.

The switching control section 2270 having the above configuration realizes a function for gradually switching the femto mode according to the communication function section 2210, and the repeater mode according to the wireless relay function section 2240 described above in accordance with given conditions.

Also, the MAC processing section 2211, High Layer processing section 2212, and selection control section 2277 are included in a CPU 2201, and the encoder 2213, modulating section 2214, IFFT section 2215, D/A converter 2216, A/D converter 2224, FFT section 2225, RS extracting section 2226, channel estimating section 2227, demodulating section 2228, decoder 2229, A/D converter 2273, FFT section 2274, RS extracting section 2275, and RSSI measuring section 2276 are included in a DSP 2202, and other than those are RF components 2203.

4.3 Switching Control Section

Now, detailed description will be made regarding the switching control section 2270.

Upon receiving a high-frequency signal via the base station antenna 2241, duplexer 2242, and reception amplifier 2243, the down converter 2272 subjects the received signal to down conversion to a baseband signal using the local signal input from the local signal generating section 2271.

The A/D converter 2273 converts the input signal (analog signal) from the down converter 2272 into a digital signal, and outputs to the FFT section 2274. The FFT section 2274 transforms the discrete sequence of a temporal area into the discrete spectrum of a frequency region.

The RS extracting section 2275 extracts a RS signal, and outputs to the RSSI measuring section 2276.

The RSSI measuring section 2276 measures a RSSI value at the own femto base station from the input signal from the RS extracting section 2275, and outputs the measurement result to the selection control section 2277.

The selection control section 2277 controls whether the switches 2278 and 2279 operate in the femto mode or repeater mode, based on the input from the RSSI measuring section 2276.

For example, in the event that the RSSI is a smaller value than a threshold, the selection control section 2277 outputs a control signal to the switches 2278 and 2279 so as to operate in the femto mode. On the contrary, in the event that the RSSI is a greater value than the threshold, the selection control section 2277 outputs a control signal to the switches 2278 and 2279 so as to operate in the repeater mode.

At this time, the selection control section 2277 outputs the above control signal to each of the variable resistors 2281, 2282, 2284, and 2285.

The variable resistors 2281, 2282, 2284, and 2285 operate based on the input control signal.

For example, in the event that the selection control section 2277 has selected to operate in the femto mode, and has output a control signal so as to perform communication employing the communication function section, the resistance values of the variable resistors 2281 and 2285 are gradually brought close to the minimum value, and the resistance values of the variable resistors 2282 and 2284 are gradually brought close to the maximum value.

Also, in the event that the selection control section 2277 has selected to operate in the repeater mode, and has output a control signal so as to perform communication employing the wireless relay function section, the resistance values of the variable resistors 2281 and 2285 are gradually brought close to the maximum value, and the resistance values of the variable resistors 2282 and 2284 are gradually brought close to the minimum value.

The synthesizer 2280 outputs the signal input via the variable resistors 2281 and 2282 to the transmission amplifier 2219.

The synthesizer 2283 outputs the signal from the reception amplifier 2222 to the variable resistors 2284 and 2285.

4.4.1 Downlink

Now, downlink communication according to the fourth embodiment will be described.

With the communication function section 2210, the data signal received via the MAC processing section 2211 and High Layer processing section 2212 is output to the encoder 2213.

The encoder 2213 outputs, for example, a signal encoded by an encoder or the like to the modulating section 2214.

The modulating section 2214 converts a data bit string to be transmitted into a complex symbol string for modulating the carriers, and outputs to the IFFT section 2215.

The complex symbol string input from the modulating section 2214 is accumulated in the S/P converter 2230, and collectively transformed by inverse discrete Fourier transform at the IFFT converter 2231, thereby generating sampled values. Further, the obtained sampled values are subjected to parallel-to-serial conversion at the P/S converter 2232, a CP (Cyclic Prefix) is inserted thereinto at the CP inserting section 2233, and output to the D/A converter 2216.

The D/A converter 2216 converts the signal input from the IFFT section 2215 into an analog signal, and outputs the signal converted into a continuous signal to the up converter 2218. The up converter 2218 generates a carrier band signal by being multiplied by the carriers output from the local signal generating section 2217, and outputs to the switch 2278.

The switch 2278 controls input from the up converter 2218 to the transmission amplifier 2219 by the selection control section 2277. For example, in the event that the selection control section 2277 has selected to operate in the femto mode, and has performed control so as to perform communication employing the communication function section, the resistance value of the variable resistor 2281 is gradually brought close to the minimum value, and the resistance value of the variable resistor 2282 is gradually brought close to the maximum value.

The synthesizer 2280 synthesizes the signal input from the up converter 2218 via the variable resistor 2281, and the signal input from a later-described reception amplifier 2243 via the variable resistor 2282, and outputs to the transmission amplifier 2219.

Thus, the signal from the communication function section 2210 gradually increases, the signal from the wireless relay function section 2240 gradually decreases, and accordingly, handover from the repeater mode to the femto mode is enabled, and no communication interruption occurs.

With the wireless relay function section 2240, the signal received via the base station antenna 2241 is input to the duplexer 2242, and output to the reception amplifier 2243. The reception amplifier 2243 amplifies the signal input from the duplexer 2242, and outputs to the switch 2278.

With regard to the switch 2278, input from the reception amplifier 2243 to the transmission amplifier 2219 is controlled by the selection control section 2277. For example, in the event that the selection control section 2277 has selected to operate in the repeater mode, and has performed control so as to perform communication employing the wireless relay function section, the resistance value of the variable resistor 2281 is gradually brought close to the maximum value, and the resistance value of the variable resistor 2282 is gradually brought close to the minimum value.

The synthesizer 2280 synthesizes the signal input from the reception amplifier 2243 via the variable resistor 2282, and the signal input from the up converter 2218 via the variable resistor 2281, and outputs to the transmission amplifier 2219.

Thus, the signal from the communication function section 2210 gradually decreases, the signal from the wireless relay function section 2240 gradually increases, and accordingly, handover from the femto mode to the repeater mode is enabled, and no communication interruption occurs.

The transmission amplifier 2219 amplifies the signal input from the switch 2278, and transmits to the mobile station via the duplexer 2220 and mobile station antenna 2221.

4.4.2 Uplink

Next, uplink communication according to the fourth embodiment will be described.

The signal received via the mobile station antenna 2221 is output to the reception amplifier 2222 via the duplexer 2220. The reception amplifier 2222 amplifies the signal input from the duplexer 2220, and outputs to the switch 2279.

The switch 2279 inputs the signal from the reception amplifier 2222 to the down converter 2223 or transmission amplifier 2244 in accordance with the control signal from the selection control section 2277.

With the communication function section 2210, in the event that the selection control section 2277 has selected to operate in the femto mode, and has performed control so as to perform communication employing the communication function section, the resistance value of the variable resistor 2285 is gradually brought close to the minimum value, and the resistance value of the variable resistor 2284 is gradually brought close to the maximum value.

The synthesizer 2283 outputs the signal from the reception amplifier 2222 to the down converter 2223 via the variable resistor 2285. The synthesizer 2283 outputs the signal from the reception amplifier 2222 to the transmission amplifier 2244 via the variable resistor 2284.

Thus, the signal to the communication function section 2210 gradually increases, the signal to the wireless relay function section 2240 gradually decreases, and accordingly, handover from the repeater mode to the femto mode is enabled, and no communication interruption occurs.

Upon the signal being input from the switch 2279, the down converter 2223 subjects the signal to down conversion to a baseband signal using the local signal input from the local signal generating section 2217, and then outputs to the A/D converter 2224. Upon the signal being input from the down converter 2223, the A/D converter 2224 converts the signal into a digital signal, and outputs to the FFT section 2225.

The CP removing section 2234 removes a CP appended to the signal, and outputs to the S/P converter 2235. The S/P converter 2235 subjects the signal input from the CP removing section 2234 to serial-to-parallel conversion, and outputs to the FFT converter 2236. The FFT converter 2236 transforms the signal from a sampled value to a complex symbol using inverse discrete Fourier transform, and outputs to the P/S converter 2237. The P/S converter 2237 performs parallel-to-serial conversion, and outputs to the RS extracting section 2226 and demodulating section 2228.

The RS extracting section 2226 extracts a RS signal inserted for synchronous detection, and outputs to the channel estimating section 2227. The channel estimating section 2227 estimates the temporal and frequency changes of a radio propagation path based on the RS signal input from the RS extracting section 2226.

The demodulating section 2228 corrects radio propagation distortion by subtracting radio propagation change input from the channel estimating section 2227 from the modulated signal input from the FFT section 2225, and outputs to the decoder 2229.

The decoder 2229 decodes the signal input from the demodulating section 2228. The MAC processing section 2211 and High Layer processing section 2212 convert the signal input from the decoder 2229 into a signal within an IP network. In the event that the selection control section 2277 has selected to operate in the repeater mode, and has performed control so as to perform communication employing the wireless relay function section, the MAC processing section 2211 and High Layer processing section 2212 perform control so as not to transmit illegal signals for a cable network within the IP network.

With the wireless relay function section 2240, in the event that the selection control section 2277 has selected to operate in the repeater mode, and has performed control so as to perform communication employing the wireless relay function section, the resistance value of the variable resistor 2285 is gradually brought close to the maximum value, and the resistance value of the variable resistor 2284 is gradually brought close to the minimum value.

The synthesizer 2283 outputs the signal from the reception amplifier 2222 to the transmission amplifier 2244 via the variable resistor 2284. The synthesizer 2283 outputs the signal from the reception amplifier 2222 to the down converter 2223 via the variable resistor 2285,

Thus, the signal to the wireless relay function section 2240 gradually increases, the signal to the communication function section 2210 gradually decreases, and accordingly, handover from the femto mode to the repeater mode is enabled, and no communication interruption occurs.

The transmission amplifier 2244 transmits the signal to a macro base station via the duplexer 2242 and base station antenna 2241.

4.5 Switching Processing between Femto Mode and Repeater Mode

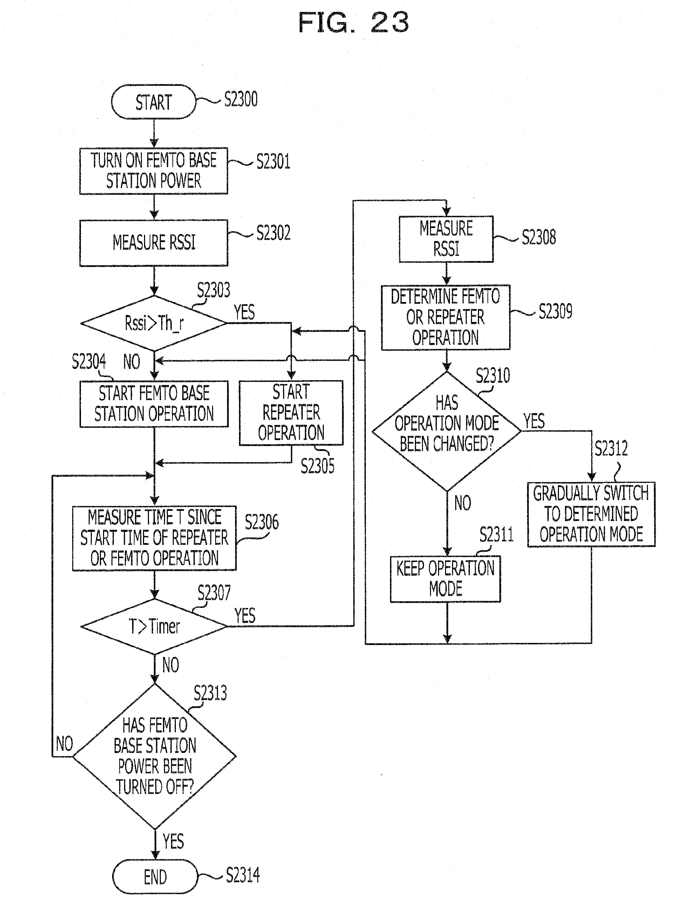

FIG. 23 is a flowchart illustrating switching operation and processing between the femto mode and the repeater mode at the femto base station according to the fourth embodiment.

After installation of the femto base station (S2300), upon the power of the femto base station being turned on (S2301), the RSSI measuring section 2276 measures the downlink RSSI at the installation location (S2302).

The selection control section 2277 selects one of the femto mode and repeater mode based on the measurement result of the RSSI (S2303). At this time, in the event that the RSSI is smaller than a threshold, the selection control section 2277 selects the femto mode, and performs control so as to operate as a femto base station and to perform communication employing the communication function section (s2304), and in the event that the RSSI is greater than the threshold, selects the repeater mode, and performs control so as to operate as a repeater and to perform communication employing the wireless relay function section (s2305).

Next, the RSSI measuring section 2276 measures time since operation start time when starting operation as the femto mode or repeater mode (52306).

The RSSI measuring section 2276 determines whether or not given time has elapsed since the femto base station started operation as the femto mode or repeater mode (S2307). In the event that the given time has elapsed, the RSSI measuring section 2276 measures RSSI again (S2308). Based on the measurement result of the RSSI, the selection control section 2277 determines in which of the femto mode or repeater mode the femto base station operates (S2309). The selection control section 2277 determines whether or not the operation mode determined in step S2309 is the same as the current operation mode (S2310). In the event that the determined operation mode is the same as the current operation mode, the selection control section 2277 selects to operate in the unchanged operation mode and controls to perform communication employing the same function section (S2311). In the event that the operation mode determined in step S2309 differs from the current operation mode, the selection control section 2277 gradually switches from the current operation mode to the determined operation mode (S2312).

Also, in the event that the given time has not elapsed in step S2307, the RSSI measuring section 2276 confirms whether the power of the femto base station is on or off (S2313).

In the event that the power of the femto base station is on, the RSSI measuring section 2276 returns to step S2306, and measures point-in-time since the start operation time of the femto mode or repeater mode (S2306). When the power of the femto base station is turned off, the processing is ended (S2314).

Also, when switching from the repeater mode to the femto mode, and when switching from the femto mode to the repeater mode, a mobile station connected to this femto base station performs handover, thereby switching communication. At this time, the mobile station may carry out handover by informing a handover request to the femto base station or macro base station, or the femto base station or macro base station may perform control instead of the mobile station.

According to the fourth embodiment, the user may freely install a femto base station, and also improve the throughput of a mobile station for performing communication with the femto base station, and further reduce interference as to a mobile station for performing communication with the base station existing outdoors. Further, a probability that the user who connects to the femto base station will have communication interruption may be reduced.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the scope of the invention.

## Claims

1. A base station comprising:

   a first communication section configured to communicate a wireless signal with the mobile station and another base station;
   a second communication section configured to communicate a data signal with a core network being connected to the base station;
   a wireless relay function section configured to perform first control to relay the wireless signal to be communicated with the other base station between the other base station and the mobile station;
   a communication function section configured to perform second control to convert between a data signal and a wireless signal, and to transmit the converted data signal and the converted wireless signal; and
   a selection control section configured to select at least one of the first control and the second control to use for communication with the mobile station, based on a reception level of the wireless signal from the other base station.

2. The base station according to Claim 1, wherein the selection control section selects the first control in the event that the reception level is greater than a threshold, and selects the second control in the event that the reception level is smaller than a threshold.

3. The base station according to Claim 1 or 2, wherein the communication function section performs the second control so as to convert the data signal from the core network into a wireless signal and to transmit the converted wireless signal to the mobile station, and so as to convert the wireless signal from the mobile station into a data signal and to transmit the converted data signal to the core network.

4. The base station according to any one of Claims 1 to 3, further comprising:

a measuring section configured to measure the reception level at the first communication section.

5. The base station according to Claim 4, wherein the measuring section measures the reception level using at least one of SINR (Signal Interference Noise Ratio) and RSSI (Received Signal Strength Indication).

6. The base station according to Claim 4 or 5, wherein the measuring section performs second measurement after elapse of given time since first measurement;
and wherein the selection control section performs, in the event that first communication selected by the measurement result of the first measurement, and second communication selected by the measurement result of the second measurement differ, control so as to switch to the second communication after performing both of the first control and second control for the first communication.

7. The base station according to Claim 6, wherein the communication function section further includes a first variable resistor capable of control of a resistance value in a range from a first minimum value to a first maximum value,
and wherein the wireless relay function section further includes a second variable resistor capable of control of a resistance value in a range from a second minimum value to a second maximum value,
and wherein the selection control section switches communication by bringing the resistance value of the second variable resistor close to the second minimum value, and also bringing the resistance value of the first variable resistor close to the first maximum value in the event of switching from the first control to the second control, and switches communication by bringing the resistance value of the first variable resistor close to the first minimum value, and also bringing the resistance value of the second variable resistor close to the second maximum value in the event of switching from the first control to the second control.

8. A communication system comprising:

a base station according to any one of Claims 1 to 7; and
a mobile station which communicates with the base station.

9. A communication method comprising:

receiving, at a base station, a wireless signal from a mobile station and another base station;
receiving, at the base station, a data signal from a core network which is connected to the base station; and
based on a reception level of the wireless signal from the other base station, selecting at least one of first control and second control to use for communication between the base station and the mobile station,
the first control relaying the wireless signal communicated with the other base station between the other base station and the mobile station, and
the second control converting between a data signal and a wireless signal, and to transmit the converted data signal and the converted wireless signal.

10. The communication method according to Claim 9, wherein the selecting selects the first control in the event that the reception level is greater than a threshold, and selects the second control in the event that the reception level is smaller than the threshold.

11. The communication method according to Claim 9 or 10, wherein the second control converting the data signal from the core network into a wireless signal, transmitting the converted wireless signal to the mobile station, converting the wireless signal from the mobile station into a data signal, and transmitting the converted data signal to the core network.

12. The communication method according to any one of Claims 9 to 11, further comprising:

measuring the reception level at the base station.

13. The communication method according to Claim 12, wherein the measuring measures the reception level by using at lest one of SINR (Signal Interference Noise Ratio) and RSSI (Received Signal Strength Indication).

14. The communication method according to Claim 12 or 13, wherein the measuring performs second measurement after elapse of given time since first measurement;
and wherein the selecting performs, in the event that first communication selected by the measurement result of the first measurement, and second communication selected by the measurement result of the second measurement differ, control so as to switch to the second communication after performing both of the first control and second control for the first communication.

FIG. 1

FIG. 2

NETWORK

MEASURE SINR

22

21

24

23

FIG. 3

FIG. 4

NETWORK

MACRO BASE STATION LINE

42

43

44

41

INTERFERENCE WAVES
I=S2+S3+S4

SIGNAL WAVES
S=S1

45

## FIG. 5

# FIG. 6

START —S60

TURN ON FEMTO BASE STATION POWER —S61

MEASURE SINR —S62

S63

Sinr > Th_si — YES

NO

START FEMTO BASE STATION OPERATION —S64

START REPEATER OPERATION —S65

MEASURE TIME T SINCE START TIME OF REPEATER OR FEMTO OPERATION —S66

S67

T > Timer — YES

NO

S68

HAS FEMTO BASE STATION POWER BEEN TURNED OFF? — NO

YES

END —S69

# FIG. 7

FIG. 8

NETWORK

MEASURE RSSI

81

~82

84

83

# FIG. 9

NETWORK

MACRO BASE STATION LINE

SIGNAL WAVES S=S1

INTERFERENCE WAVES
I=S2+S3+S4

91

92

93

94

95

## FIG. 10

# FIG. 11

```
        ( START )~S110
              │
              ▼
┌─────────────────────────────┐
│  TURN ON FEMTO BASE STATION │~S111
│          POWER              │
└─────────────────────────────┘
              │
              ▼
┌─────────────────────────────┐
│        MEASURE RSSI         │~S112
└─────────────────────────────┘
              │
              ▼         S113
         ╱─────────────╲        YES
        ╱  Rssi > Th_r  ╲──────────────┐
        ╲               ╱              │
         ╲─────────────╱               │
              │ NO    S114             │              S115
              ▼                        ▼
┌─────────────────────────┐   ┌─────────────────────────┐
│  START FEMTO BASE STATION│   │  START REPEATER OPERATION│
│       OPERATION          │   │                         │
└─────────────────────────┘   └─────────────────────────┘
              │                        │
              ▼◄───────────────────────┘
┌─────────────────────────────────┐
│ MEASURE TIME T SINCE START TIME │~S116
│ OF REPEATER OR FEMTO OPERATION  │
└─────────────────────────────────┘
              │
              ▼        S117
         ╱─────────────╲      YES
        ╱   T > Timer    ╲──────────
        ╲               ╱
         ╲─────────────╱
              │ NO
              ▼        S118
         ╱─────────────────╲
   NO   ╱    HAS FEMTO       ╲
◄──────╱ BASE STATION POWER BEEN╲
        ╲    TURNED OFF?     ╱
         ╲─────────────────╱
              │ YES
              ▼
        ( END )~S119
```

# FIG. 12

NETWORK

MEASURE SINR

1202

1201

1204

1203

FIG. 13

FIG. 14

RECEPTION
LEVEL

RECEPTION
LEVEL

RECEPTION
LEVEL

RECEPTION
LEVEL

RECEPTION
LEVEL

FEMTO    REPEATER

FEMTO    REPEATER

FEMTO    REPEATER

FEMTO    REPEATER

FEMTO    REPEATER

FIG. 15

## FIG. 16

# FIG. 17

START —S1700

TURN ON FEMTO BASE STATION POWER —S1701

MEASURE SINR —S1702

S1703
Sinr > Th_si

YES

S1704 NO

START FEMTO BASE STATION OPERATION

START REPEATER OPERATION
S1705

MEASURE TIME T SINCE START TIME OF REPEATER OR FEMTO OPERATION —S1706

S1707
T > Timer

YES

NO

S1713
HAS FEMTO BASE STATION POWER BEEN TURNED OFF?

NO

YES

END —S1714

MEASURE SINR —S1708

DETERMINE FEMTO OR REPEATER OPERATION —S1709

S1710
HAS OPERATION MODE BEEN CHANGED?

YES

S1712

NO

GRADUALLY SWITCH TO DETERMINED OPERATION MODE

S1711

KEEP OPERATION MODE

FIG. 18

# FIG. 19

EP 2 506 651 A2

FIG. 20

43

FIG. 21

## FIG. 22

# FIG. 23

**EP 2 506 651 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010056881 A